# EUROPEAN PATENT APPLICATION

(11) **EP 4 429 326 A1**
(43) Date of publication of application: **11.09.2024**
(21) Application number: 24162334.7
(22) Date of filing: 08.03.2024
(51) Int. Cl.: H04W 36/02, H04W 36/00, H04W 84/12, H04W 36/18

(54) **ACCESS POINT (AP)-ASSISTED AP TRANSITION**

(30) Priority: 10.03.2023 US 202363489733 P; 10.03.2023 US 202363451455 P; 26.02.2024 US 202418587772
(71) Applicant: Apple Inc., Cupertino, CA 95014 (US)
(72) Inventor: KNECKT, Jarkko L., Cupertino, 95014 (US); VERMA, Lochan, Cupertino, 95014 (US); LIU, Yong, Cupertino, 95014 (US); YONG, Su Khiong, Cupertino, 95014 (US); THAKUR, Sidharth R., Cupertino, 95014 (US); JIANG, Jinjing, Cupertino, 95014 (US); WU, Tianyu, Cupertino, 95014 (US); WANG, Qi, Cupertino, 95014 (US); HEDAYAT, Ahmad Reza, San Diego, 92121 (US)
(74) Representative: Froud, Christopher Andrew

(57) **Abstract**

Some embodiments include an apparatus, method, and computer program product for access point (AP)-assisted AP transition. Using AP-assisted AP transitions, when the STA is associated with a first access point (AP) and is transitioning to a second AP, a station (STA) can transmit to the second AP a control signal including a first indication for sequence number (SN) maintenance. The STA can receive from the second AP responsive to the first indication for SN maintenance, a first downlink (DL) transmission including a next SN. The next SN can be a continuation of an SN sequence utilized by the first AP for one or more previous DL transmissions.

## Description

### CROSS-REFERENCE TO RELATED APPLICATIONS

The present application claims the benefit of U.S. Provisional Patent Appl. No. 63/489,733, filed March 10, 2023, U.S. Provisional Patent Appl. No. 63/451,455, filed March 10, 2023, and U.S. Patent Appl. No. 18/587,772, filed February 26, 2024.

### BACKGROUND

### Field

The described embodiments relate generally to access point (AP)-assisted AP transition in a wireless communications system.

### SUMMARY

Some embodiments include a system, apparatus, article of manufacture, method, and/or computer program product and/or combinations and sub-combinations thereof, for access point (AP)-assisted AP transition.

In some embodiments, a station (STA), when the STA is associated with a first access point (AP), e.g., a current AP and is transitioning to a second AP, e.g., a new AP, can transmit to the second AP a control signal including a first indication for sequence number (SN) maintenance. The STA can receive from the second AP responsive to the first indication for SN maintenance, a first downlink (DL) transmission including a next SN. The next SN can be a continuation of an SN sequence utilized by the first AP for one or more previous DL transmissions. The STA can include a single reorder buffer communicatively coupled to the processor. The single reorder buffer corresponds to a traffic identifier (TID). The STA can receive via the transceiver, from the first AP, a second DL transmission including DL frames initially buffered at the first AP (DFIB). The STA can reorder, in the single reorder buffer, one or more packets received from the first DL transmission and the second DL transmission. The control signal can include a second indication corresponding to a DL quality of service (QoS) mapping rule for the second AP. The AP can determine the TID of the one or more packets based at least on the DL QoS mapping rule. The STA can receive via the transceiver, from the first AP, a SN allocation information frame including a second SN corresponding to the second DL transmission, wherein frames corresponding to the second SN are not yet acknowledged. The STA can transmit, via the transceiver, to the second AP, the SN allocation information frame. The STA can receive via the transceiver, from the second AP, a third DL transmission including the second SN. The STA can determine based at least on the SN allocation information frame, an amount of DL traffic buffered at the first AP. The STA can stop receiving frames from the first AP based at least on the SN allocation frame. The first DL transmission can include a first Media Access Control (MAC) service data unit (MSDU) and a second MSDU. The first MSDU can include DFIB that are forwarded to the second AP. The second MSDU can include DL frames initially buffered at the second AP. The first MSDU and the second MSDU can correspond to a same TID. The first MSDU can be received before the second MSDU.

In some embodiments, a first access point (AP), when a station (STA) is associated with the first AP and is transitioning to a second AP, can receive from the second AP a control signal including a first indication for sequence number (SN) maintenance. The first AP can transmit to the second AP, responsive to the first indication for SN maintenance, a transition response signal including an SN of an SN series utilized by the first AP for one or more previous downlink (DL) transmissions. The first AP can transmit via the transceiver, to the second AP a Media Access Control (MAC) service data unit (MSDU) with MetaData. The MetaData can include a packet number (PN) assigned to the MSDU. The MSDU can include DL frames initially buffered at the first AP (DFIB). The first AP can transmit via the transceiver, to the STA a first DL transmission with a second SN. The first DL transmission can include DFIB. The first AP can transmit to the second AP an SN allocation information frame indicating that the second SN transmitted in the first DL transmission. The first AP can receive from the STA a block acknowledgement (BA) including the SN received by the STA. The SN allocation information frame can include a status of the BA. The first AP can receive, from the STA, a block acknowledgement (BA) including a second SN of a second DL transmission, transmitted from the second AP to the STA. The first AP can transmit, to the second AP, an SN allocation information frame indicating the second SN. The first AP can receive, from the second AP, an SN allocation information frame indicating a second SN of a second DL transmission, transmitted from the first AP to the STA. The first AP can transmit DL frames determined based on the second SN indicated in the SN allocation information. The control signal can include a second indication for the second AP to utilize a same quality of service (QoS) mapping rule applied between the first AP and the STA. The transition response signal can include the QoS mapping rule.

In some embodiments, a second access point (AP), can receive from a station (STA) transitioning to the second AP, a control signal including a first indication for sequence number (SN) maintenance. The second AP can receive from a first AP with which the STA is currently associated, a transition response signal including an SN of an SN sequence utilized by the first AP, corresponding to the first indication. The second AP can transmit to the STA a first downlink (DL) transmission including a next SN. The next SN is a continuation of the SN series utilized by the first AP for one or more previous DL transmissions. The second AP can receive from the first AP a first Media Access Control (MAC) service data unit (MSDU) with MetaData. The MSDU can include DL frames initially buffered at the first AP (DFIB). The MetaData can include a second SN of the SN series. The second AP can transmit to the STA, the first MSDU with the second SN. The second AP can transmit a second DL transmission. The second DL transmission can include a first Media Access Control (MAC) service data unit (MSDU) and a second MSDU. The first MSDU can include DFIB, and the second MSDU can include DL frames initially buffered at the second AP. The first MSDU and the second MSDU can correspond to a same TID. The first MSDU can be received before the second MSDU. The second AP can receive, from the STA, a block acknowledgement (BA) including a second SN of a second DL transmission, transmitted from the first AP to the STA, can include DFIB. The second AP can transmit, to the first AP, an SN allocation information frame indicating the second SN. The second AP can receive, from the first AP, an SN allocation information frame indicating a second SN of a first DL transmission, transmitted from the second AP to the STA. The second AP can transmit DL frames determined based on the second SN indicated in the SN allocation information. The second AP can receive, from the first AP, an SN allocation information frame indicating a second SN of a first DL transmission, transmitted from the second AP to the STA. The second AP can transmit DL frames determined based on the second SN indicated in the SN allocation information. The control signal can include a second indication for the second AP to utilize a same quality of service (QoS) mapping rule applied between the first AP and the STA. The second AP can receive, from the first AP, the same QoS mapping rule. The second AP can transmit a second DL transmission according to the same QoS mapping rule.

### BRIEF DESCRIPTION OF THE FIGURES

The accompanying drawings, which are incorporated herein and form part of the specification, illustrate the presented disclosure and, together with the description, further serve to explain the principles of the disclosure and enable a person of skill in the relevant art(s) to make and use the disclosure.
FIG. 1 illustrates an example system for access point (AP)-assisted AP transition, in accordance with some embodiments of the disclosure.
FIG. 2 illustrates a block diagram of an example wireless system for AP-assisted AP transition, according to some embodiments of the disclosure.
FIG. 3 illustrates an example of a sequence diagram for AP-assisted AP transition, according to some embodiments of the disclosure.
FIG. 4 illustrate an example of station (STA) controlled signaling for AP-assisted AP transition, according to some embodiments of the disclosure.
FIG. 5 illustrates examples of STA controlled downlink (DL) Forwarding for AP-assisted AP transition, according to some embodiments of the disclosure.
FIG. 6 illustrates an example of a sequence diagram for conditional DL data forwarding for AP-assisted AP transition, according to some embodiments of the disclosure.
FIG. 7 illustrates an example system for simultaneous DL data reception from first and second APs for AP-assisted AP transition, in accordance with some embodiments of the disclosure.
FIG. 8 illustrates an example of resetting sequence numbers (SNs) in a station's (STA's) reorder buffer for AP-assisted AP transition, according to some embodiments of the disclosure.
FIG. 9 illustrates an example of a selection of an AP from which a STA receives DL frames for AP-assisted AP transition, according to some embodiments of the disclosure.
FIG. 10 illustrates an example of a sequence diagram for obtaining candidate APs for AP-assisted AP transition, according to some embodiments of the disclosure.
FIG. 11 illustrates example signaling of AP Transition Parameters for AP-assisted AP transition, according to some embodiments of the disclosure.
FIG. 12 illustrates examples of DL traffic delivery recommendations for AP-assisted AP transition, according to some embodiments of the disclosure.
FIG. 13 illustrates an example system for AP transition, in accordance with some embodiments of the disclosure.
FIG. 14 illustrates an example of a sequence diagram for AP transition, according to some embodiments of the disclosure.
FIG. 15 is an example computer system for implementing some embodiments or portion(s) thereof.
FIG. 16 illustrates an example method for a STA in AP-assisted AP transition, according to some embodiments of the disclosure.
FIG. 17 illustrates an example method for a first AP in AP-assisted AP transition, according to some embodiments of the disclosure.
FIG. 18 illustrates an example method for a second AP in AP-assisted AP transition, according to some embodiments of the disclosure.
FIG. 19 illustrates an example system for Mobility Domain enhancements, according to some embodiments of the disclosure.
FIG. 20 illustrates an example of a sequence diagram for Mobility Domain enhancements system for AP-assisted AP transition, according to some embodiments of the disclosure.
FIG. 21 illustrates an example of an Enhanced AP MLD (AP eMLD) architecture, according to some embodiments of the disclosure.
FIG. 22 illustrates an example of a sequence diagram for an AP eMLD system for AP-assisted AP transition, according to some embodiments of the disclosure.
FIG. 23 illustrates an example of a sequence diagram for AP-assisted AP transition, according to some embodiments of the disclosure.
FIG. 24A illustrates an example of a sequence diagram for SN maintenance in AP-assisted AP transition, according to some embodiments of the disclosure.
FIG. 24B illustrates an example of STA controlled signaling for AP-assisted AP transition, according to some embodiments of the disclosure.
FIG. 24C illustrates examples of STA controlled DL SN Maintenance for AP-assisted AP transition, according to some embodiments of the disclosure.
FIG. 25 illustrates an example system for AP-assisted AP transition for an explanation of a DL SN maintenance, in accordance with some embodiments of the disclosure.
FIG. 26 illustrates an example of a sequence diagram for AP-assisted AP transition, according to some embodiments of the disclosure.
FIG. 27 illustrates an example system for AP-assisted AP transition for an explanation of DL SN maintenance, in accordance with some embodiments of the disclosure.
FIG. 28A illustrates an example of a MetaData and Media Access Control (MAC) service data unit (MSDU) payload format, according to some embodiments of the disclosure.
FIG. 28B illustrates an example of a meta information format, according to some embodiments of the disclosure.
FIG. 28C illustrates examples of a packet number (PN) (counter-mode/ cipher block chaining message authentication code (CBC-MAC) protocol (CCMP) or Galois/counter mode with cipher block chaining message authentication code protocol (GCMP) Headers) field format, according to some embodiments of the disclosure.
FIG. 29 illustrates an example of DL frames transmission in the second AP, according to some embodiments of the disclosure.
FIG. 30 illustrates an example of DL frames reception during AP-assisted AP transition, according to some embodiments of the disclosure.
FIG. 31 illustrates an example system for AP-assisted AP transition for an explanation of a DL SN maintenance, in accordance with some embodiments of the disclosure.
FIG. 32 illustrates an example system for AP-assisted AP transition for an explanation of a quality of service (QoS) mapping, in accordance with some embodiments of the disclosure.
FIG. 33A illustrates an example system for AP-assisted AP transition for an explanation of a QoS mapping, in accordance with some embodiments of the disclosure.
FIG. 33B illustrates an example of STA controlled signaling for AP-assisted AP transition, according to some embodiments of the disclosure.
FIG. 33C illustrates examples of STA controlled QoS Mapping for AP-assisted AP transition, according to some embodiments of the disclosure.
FIG. 34A illustrates an example of a sequence diagram for a stream classification service (SCS) QoS Mapping settings in AP-assisted AP transition, according to some embodiments of the disclosure.
FIG. 34B illustrates an example of an SCS Descriptor Set element, according to some embodiments of the disclosure.
FIG. 35 illustrates an example of a sequence diagram for AP-assisted AP transition, according to some embodiments of the disclosure.
FIG. 36 illustrates an example method for a STA in AP-assisted AP transition, according to some embodiments of the disclosure.
FIG. 37 illustrates an example method for a first AP in AP-assisted AP transition, according to some embodiments of the disclosure.
FIG. 38 illustrates an example method for a second AP in AP-assisted AP transition, according to some embodiments of the disclosure.

The presented disclosure is described with reference to the accompanying drawings. In the drawings, generally, like reference numbers indicate identical or functionally similar elements. Additionally, generally, the left-most digit(s) of a reference number identifies the drawing in which the reference number first appears.

### DETAILED DESCRIPTION

Some embodiments include a system, apparatus, article of manufacture, method, and/or computer program product and/or combinations and sub-combinations thereof for access point (AP)-assisted AP transition. A station (STA) communicating with an AP, e.g., via Wi-Fi (or one or more 802.11-based protocols), may transition from a first AP to a second AP (e.g., perform an AP handover) for improved communications. An example problem that arises after the STA transitions to the second AP is that the STA may not be able to receive downlink (DL) data buffered at the first AP. In some embodiments, the STA can control whether the first AP and/or second AP assist in delivering the DL data buffered in the first AP to the STA. For example, the STA can transmit a signal to a second AP, where the signal includes a forwarding rule indicating how the STA receives the DL data buffered at the first AP. AP-assisted AP transition can improve the reception by the STA, of DL data buffered at the first AP.

Another example problem that arises after the STA transitions to the second AP is that the STA may not reorder frames received from the second AP consistent with frames received from the first AP. In some embodiments, the STA can control whether the first AP and/or second AP assist in maintaining a sequence number (SN) of the frames. For example, the STA can transmit a signal to the second AP, where the signal indicates whether the second AP is to maintain the numbering sequence used by the first AP, e.g., continuing from the last SN used.

Another example problem that arises after the STA transitions to the second AP is that the STA may not apply the same quality of service (QoS) settings used by the first AP to the received frames received from the second AP. In some embodiments, the STA can control whether the first AP and/or second AP assist in using the same QoS settings. For example, the STA can transmit a signal to the second AP, where the signal indicates whether the QoS settings are copied from the first AP to the second AP.

According to some aspects, the AP-assisted AP transitions can be implemented with communication techniques compatible with Institute of Electrical and Electronics Engineers (IEEE) 802.11 standards (such as, but not limited to, IEEE 802.11ac, IEEE 802.11ax, IEEE 802.11bc, IEEE 802.11bd, IEEE 802.11be, IEEE 802.11bn, etc.) For example, AP-assisted AP transitions can be implemented with Wi-Fi^{™} 6, Wi-Fi^{™} 7, Wi-Fi^{™} 8, or other Wi-Fi^{™} based on IEEE 802.11 WLAN standards. However, the aspects of this disclosure can also be applied to operations in other communication networks operating in accordance with any protocol(s).

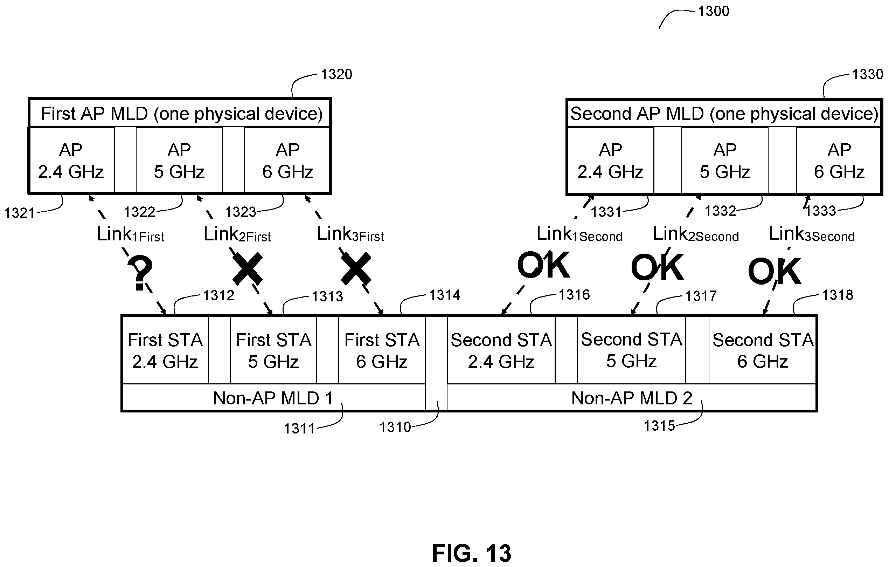

FIG. 13 illustrates an example system 1300 for AP transition, in accordance with some embodiments of the disclosure. The system 1300 illustrates communications between a client device 1310, a first AP multi-link device (MLD) 1320, and a second AP MLD 1330. The client device 1310 can be one physical device, including non-AP MLD1 1311 (e.g., a STA MLD) and non-AP MLD2 1315. APs 1321, 1322, and 1323 of the first AP MLD 1320 can communicate with first STAs 1312, 1313, and 1314 of the non-AP MLD1 1311 using 2.4 GHz, 5 GHz, and 6 GHz links, respectively.

In example 1300, the links between the first AP MLD 1320 and the non-AP MLD1 1311 may be insufficient to continue the communication. For example, 5 and 6 GHz link quality (e.g., RSSI) may be insufficient to send data. Therefore, the client device 1310 may transition from the first AP MLD 1320 to the second AP MLD 1330. After the transition, APs 1331, 1332, and 1333 of the second AP MLD 1330 communicate with STAs 1316, 1317, and 1318 of the non-AP MLD2 1315 using 2.4 GHz, 5 GHz, and 6 GHz links.

After the AP transition to the second AP, the non-AP MLD1 1311 may not be able to receive buffered DL data from the first AP MLD 1320 due to many reasons, for instance poor link performance or the radio may be operating in another link. For example, first STA 1312 may try to receive buffered DL data from the first AP MLD 1320 using a 2.4 GHz link. But, the first STA 1312 may experience high transmission delays and high power consumption due to retransmissions and low transmission rates based on co-existence issues (e.g., the first STA 1312 may have Bluetooth^{™} and ZigBee^{®} operating in 2.4 GHz, which causes interference on the 2.4 GHz link.) Also, in some networks, high-end non-AP MLD operation (e.g., client device 1310) in 2.4 GHz may not be tolerated by the APs. For instance, the first AP MLD 1320 may not allow the non-AP MLD 1 1311 to receive data on a 2.4 GHz link. In such a situation, the client device 1310 cannot receive the buffered DL data from the first AP MLD 1320 as originally scheduled, resulting in a data loss problem.

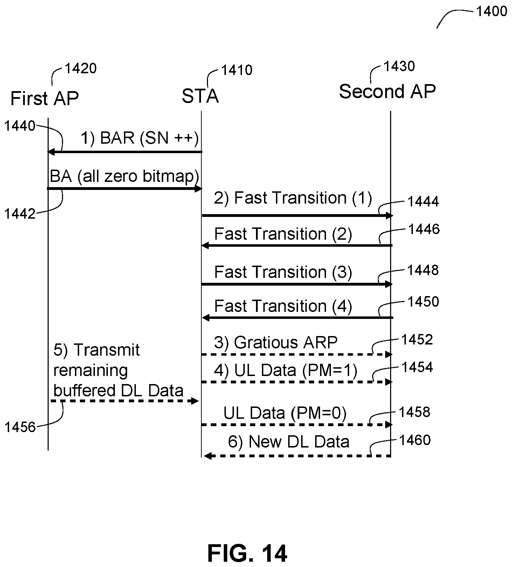

FIG. 14 illustrates an example of a sequence diagram 1400 for AP transition, according to some embodiments of the disclosure. In this sequence, a STA 1410 tries to transition from a first AP 1420 to a second AP 1430. Before starting operations, the STA 1410 scans candidate APs and decides to move to the second AP 1430.

At operation 1440, the STA 1410 sends a Block ACK Request (BAR) to the first AP 1420 to cause the first AP 1420 to flush the first AP 1420's uplink (UL) reorder buffered frames to the Internet (e.g., by increasing a sequence number (SN) of the frames in transmission.) At operation 1442, the first AP 1420 sends a Block Acknowledgment (BA), including all zero bitmaps, to the STA 1410.

At operations 1444, 1446, 1448, and 1450, the STA 1410 and the second AP 1430 exchange Fast Transition messages (1), (2), (3), and (4). After the second AP 1430 sends the Fast Transition message (4), the STA 1410 associates with the second AP 1430.

At operation 1452, the STA 1410 sends a Gratuitous Address Resolution Protocol (ARP) frame to route data to the STA 1410 through the second AP 1430.

At operation 1454, the STA 1410 further sends UL data, including a power management (PM) value of 1.

At operation 1456, the first AP 1420 transmits remaining buffered DL data to the STA 1410 until no more data is available/arriving at the first AP 1420.

At operation 1458, the STA 1410 sends UL data, including the PM value of 0.

At operation 1460, the second AP 1430 sends newly received DL data to the STA 1410.

However, in operation 1456, the first AP 1420 may be unable to transmit the buffered DL data because the link between the first AP 1420 and the STA 1410 may be in a poor condition. In such a situation, the STA 1410 cannot receive the buffered DL data, from the first AP 1420, as originally scheduled to receive, which may cause a data loss problem.

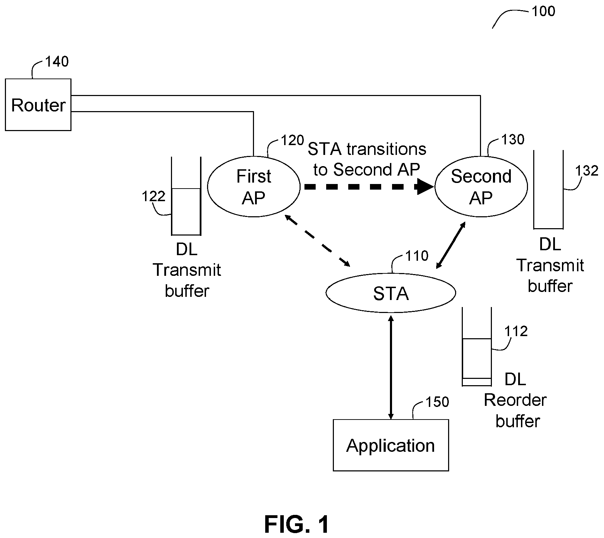

FIG. 1 illustrates an example system 100 for access point (AP)-assisted AP transition, in accordance with some embodiments of the disclosure. Example system 100 is provided for the purpose of illustration only and is not limiting of the disclosed embodiments. FIG. 1 may illustrate how DL frames are handle during the transition. System 100 can include STA 110, first AP 120, second AP 130, and router 140. The STA 110 may include, but is not limited to, WLAN electronic devices such as wireless communication devices, smart phones, laptops, desktops, tablets, personal assistants, monitors, televisions, wearable devices, gaming devices, Internet of Thing (IoT) devices, and the like. First AP 120 and/or second AP 130 may include but are not limited to WLAN electronic devices such as a wireless router, a wearable device (e.g., a smart watch), a wireless communication device (e.g., a smart phone), a gaming device, or a combination thereof. First AP 120, second AP 130 and STA 110 can communicate wirelessly over a WLAN. Communications from the WLAN may occur via router 140 to a network such as the Internet (not shown.) The wireless communications among STA 110, first AP 120, and second AP 130 can be based on a wide variety of wireless communication techniques. These techniques can include, but are not limited to, techniques based on IEEE 802.11 (such as, but not limited to IEEE 802.11ac, IEEE 802.11ax, IEEE 802.11bc, IEEE 802.11bd, IEEE 802.11be, IEEE 802.1 1v, IEEE 802. 11r, etc. standards).

For example, the STA 110 can communicate with a first AP 120 and a second AP 130. A router 140, connected to the internet, communicates with the first AP 120 and the second AP 130 to send and receive the data to and from the STA 110. Application 150 is installed in a client device, which includes the STA 110. The STA 110 communicates with the internet for application 150. The STA 110 has a DL reorder buffer 112 to manage data received from APs (e.g., first AP 120 and/or second AP 130.) The first AP 120 and the second AP 130 have DL transmit buffers 122 and 132, respectively, to manage data to be sent to the STA 110.

If there are some triggers that the STA 110 needs to transition from the first AP 120 to the second AP 130, for example, signal quality, interference, and policy reasons, the STA 110 may initiate the transition. Before the transition, since the STA 110 and the first AP 120 are communicating, as shown in FIG 1, there is still DFIB in the DL transmit buffer 122 of the first AP 120. Also, the AP 120 may buffer late arriving DL frames. The late arriving DL frames are DL frames addressed to the STA 110 and received by the first AP 120 from the network via the router 140 after or during the transition. The buffered DL frames and late arriving DL frames can be referred to as DL frames initially buffered at a first AP (DFIB). After the transition, the DFIB should be sent to the STA 110, however, the link between the first AP 120 and the STA 110 may be insufficient to transmit the DFIB. In this disclosure, the STA 110 may select to receive DFIB from the first AP 120, the second AP 130, or both the first AP 120 and the second AP 130.

In some embodiments, the STA 110, the first AP 120, and/or the second AP 130 may be multi-link devices (MLDs). As an example, the STA 110 may include two or more different the STAs (not shown) as the MLD, with a first STA communicating with the first AP 120 and a second STA communicating with the second AP 130 after the transition. The first STA and the second STA can be MLDs, that may have different capabilities, and the first and second STAs can be implemented within the same physical client device (e.g., phone, laptop, tablet, etc.)

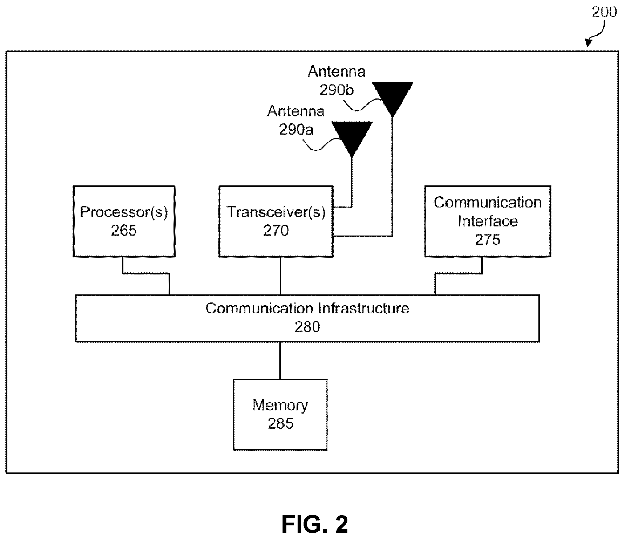

FIG. 2 illustrates a block diagram of an example wireless system 200 for AP-assisted AP transition, according to some embodiments of the disclosure. For explanation purposes and not a limitation, FIG. 2 may be described with reference to elements from FIG. 1. For example, system 200 may be any of the electronic devices: the STA 110, the first AP 120, the second AP 130, or the router 140 of system 100. System 200 includes one or more processors 265, transceiver(s) 270, communication interface 275, communication infrastructure 280, memory 285, and antenna 290. Memory 285 may include random access memory (RAM) and/or cache, and may include control logic (e.g., computer instructions) and/or data. One or more processors 265 can execute the instructions stored in memory 285 to perform operations enabling wireless system 200 to transmit and receive wireless communications, including the functions for AP-assisted AP transition. In some embodiments, one or more processors 265 can be "hard coded" to perform the functions described herein. Transceiver(s) 270 transmits and receives wireless communications signals including wireless communications supporting AP-assisted AP transition according to some embodiments, and may be coupled to one or more antennas 290 (e.g., 290a, 290b). In some embodiments, a transceiver 270a (not shown) may be coupled to antenna 290a and different transceiver 270b (not shown) can be coupled to antenna 290b. Communication interface 275 allows system 200 to communicate with other devices that may be wired and/or wireless. Communication infrastructure 280 may be a bus. Antenna 290 may include one or more antennas that may be the same or different types.

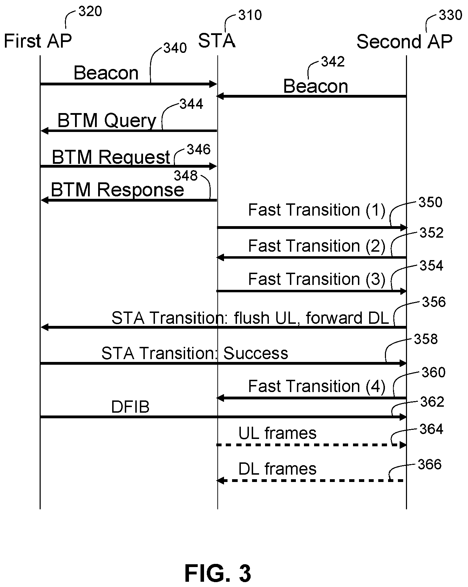

FIG. 3 illustrates an example of a sequence diagram 300 for an AP-assisted AP transition, according to some embodiments of the disclosure. For explanation purposes and not a limitation, FIG. 3 may be described with reference to elements from other figures in the disclosure. For example, a STA 310 may be the STA 110, a first AP 320 may be the first AP 120, and a second AP 330 may be the second AP 130 of system 100. In sequence diagram 300, the STA 310 transitions from the first AP 320 to the second AP 330, and the STA 310 can select whether the DFIB in the first AP 320 is received from the first AP 320 and/or the second AP 330.

At operations 340 and 342, the STA 310 receives beacon frames from the first AP 320 and the second AP 330 (e.g., by performing a scan.) For example, the STA 310 may send probe requests (not shown) to the first AP 320 and the second AP 330 to receive the beacon frames or probe responses. As such, the STA 310 can scan available APs in proximity (e.g., neighboring APs.)

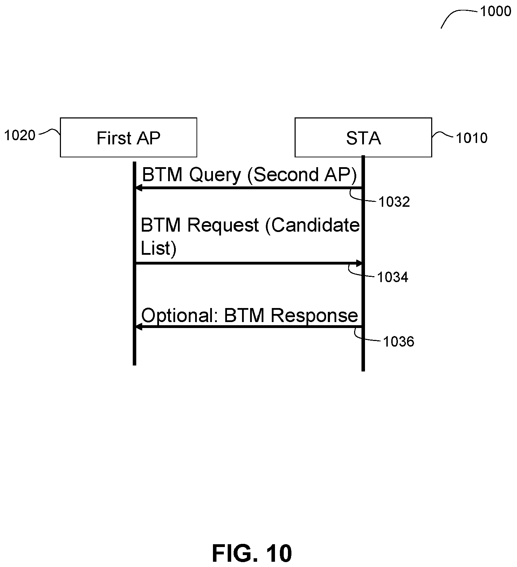

At operations 344, 346, and 348, the first AP 320 and the STA 310 exchange Basic Service Set (BSS) Transition Management (BTM) messages. By exchanging the BTM messages, the STA 310 can query and determine link performance metrics corresponding to the first AP 320 and neighboring APs (e.g., second AP 330) as well as capabilities supporting enhanced AP transitions (e.g., AP-assisted AP transition) for the first AP 320 and neighboring APs. Details of the BTM messages are described below in FIG. 10.

At operations 350, 352, and 354, the STA 310 and the second AP 330 exchange Fast Transition frames (1), (2), and (3). Fast Transition frames are frames exchanged between Fast Transition-capable devices for a transition. By exchanging the Fast Transition frames, the STA 310 initiates a transition from the first AP 320 to the second AP 330. The Fast Transition frame (3), (e.g., a (Re-)association Request), may include identification information of the first AP 320 and the STA 310 to let the second AP 330 know how to contact the first AP 320. In some embodiments, Fast Transition frame (3) or any other frames sent from the STA 310 to the second AP 330 before the transition may include a signal (e.g., a Data Transition Control Field) that includes a forwarding rule. The STA 310 can select values of the forwarding rule to indicate how the STA 310 receives DFIB buffered in the first AP 320.

At operations 356 and 358, the second AP 330 and the first AP 320 exchange STA transition messages. At operation 356, the second AP 330 transmits an instruction to the first AP 320 in accordance with the forwarding rule received from the STA 310. The first AP 320 performs the received instruction according to the forwarding rule. The instruction may include whether the first AP 320 flushes UL data buffered in the first AP 320 to the internet, whether the first AP 320 forwards DFIB buffered in the first AP 320 to the second AP 330, and/or whether the first AP 320 and the second AP 330 maintain the SNs of the data (e.g., continue using the DL SNs used by the first AP 320 at the second AP 330.) At operation 358, the first AP 320 responds with a success status of the instruction.

At operation 360, the second AP 330 transmits a Fast Transition frame (4) (e.g., a Re-association Response frame), to the STA 310 as an indication of a completion of the transition (e.g., handover from first AP 320 to second AP 330.)

At operation 362, the first AP 320 may transmit the DFIB to the second AP 330 in accordance with the forwarding rule. At operation 362, the first AP may transmit meta data for purposes such as Quality of Service (QoS) control. Operation 362 may be performed both before and/or after operation 360. As described below, operation 362 is not necessarily a required operation, depending on the contents of the forwarding rule. For example, if the forwarding rule specifies that the STA 310 receives the DL frames only from the second AP 330, the DL frames is sent to the STA 310 only from the second AP 330. In some embodiments, based on the forwarding rule, only the first AP 320 can transmit the DFIB to the STA 310. And, in some embodiments, based on the forwarding rule, the STA 310 can receive the DFIB (e.g., a portion of the DFIB) first from the first AP 320 and then from the second AP 330. In some embodiments, the STA 310 can receive the DFIB (e.g., a portion of the DFIB) from the first AP 320 and from the second AP 330 at the same time (e.g., STA 310 may be a MLD.)

At operations 364 and 366, the STA 310 and the second AP 330 exchange UL data and newly received DL frames as normal communication operations. The newly received DL frames can be DL frames received from the internet via the router after the transition.

In this way, the second AP 330 assists the STA 310 in AP transitions, allowing the STA 310 to receive DL frames more reliably. In other words, using the AP-assisted AP transition, STAs are more likely to receive DFIB buffered in the first AP after an AP transition from the first AP to the second AP.

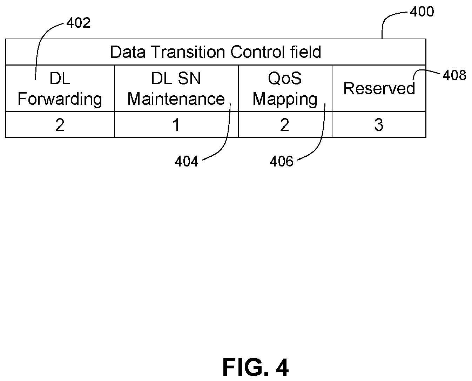

FIG. 4 illustrate an example of station (STA) controlled signaling for AP-assisted AP transition, according to some embodiments of the disclosure. For explanation purposes and not a limitation, FIG. 4 may be described with reference to elements from FIG. 3. For example, STA 310 may transmit a signal to second AP 330 such as Data Transition Control field 400 that includes a forwarding rule. For example, Data Transition Control field 400 can be included in Fast transition frame (3) in operation 354 of FIG. 3. Data Transition Control field 400 can include DL Forwarding subfield 402, DL SN Maintenance subfield 404, QoS Mapping subfield 406, and Reserved subfield 408. DL Forwarding subfield 402 describes a forwarding rule, which indicates how the STA 310 receives DFIB buffered in the first AP 320. In some embodiments, two bits are allocated in DL Forwarding subfield 402. DL SN Maintenance subfield 404 indicates how SNs of the DL frames in the DL transmit buffer of the second AP 330 are maintained or renumbered in the second AP 330. Note that in the first AP 320, the SNs of the DFIB in the first AP 320's DL transmit buffer are maintained before and after the transition. In some embodiments, one bit is allocated in DL SN Maintenance subfield 404. QoS Mapping subfield 406 indicates how QoS settings or rules between the STA 310 and the first AP 320 are shared with the second AP 330. In some embodiments, two bits are allocated in QoS Mapping subfield 406. Reserved subfield 408 is reserved for future use. In some embodiments, three bits may be allocated in the Reserved subfield 408.

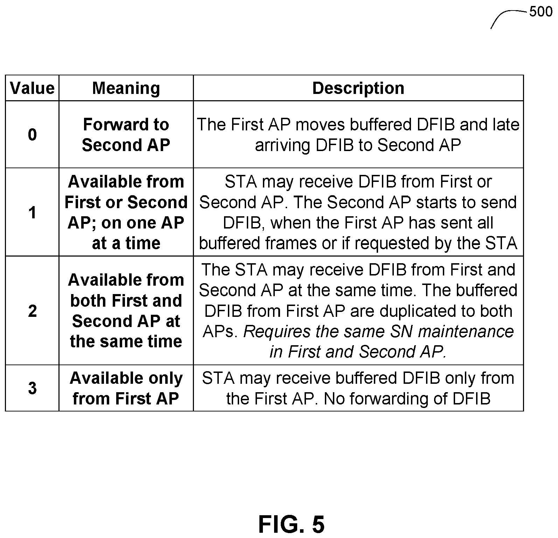

FIG. 5 illustrates examples 500 of STA controlled downlink (DL) Forwarding for AP-assisted AP transition, according to some embodiments of the disclosure. For explanation purposes and not a limitation, FIG. 5 may be described with reference to elements from FIG. 3. For example, STA 310 may transmit a signal to second AP 330 such as Data Transition Control field 400 that includes a forwarding rule in DL Forwarding subfield 402. For example, Data Transition Control field 400 including DL Forwarding subfield 402 can be included in Fast transition frame (3) in operation 354 of FIG. 3. Example 500 illustrates various values of DL Forwarding subfield 402 selected by STA 310, and the operations that follow for STA 310 to obtain DFIB buffered at the first AP 320.

In some embodiments, when the DL Forwarding subfield 402 value (e.g., forwarding rule) equals 0-2, the first AP 320 transmits the DFIB to the second AP 330. In some embodiments, when the DL Forwarding subfield 402 value equals 1-3, first AP 320 transmits the DFIB to the STA 310.

If DL Forwarding subfield 402 (e.g., a forwarding rule) has a value of 0, the first AP 320 forwards the DFIB buffered in the first AP 320 to the second AP 330. As such, the STA 310 may receive DFIB from the second AP 330 with no missing DL frames. The STA 310 may receive the DFIB only from the second AP 330.

If DL Forwarding subfield 402 has a value of 1, the first AP 320 forwards the DFIB to the second AP 330 and to the STA 310. The value of 1 indicates that the STA can receive the DFIB from the first AP 320 or the second AP 330. This means that the second AP 330 starts to send DL frames (e.g., DFIB or new DL frames) after the first AP 320 has sent a portion of or all of the DFIB or if requested by the STA 310. In other words, the STA 310 receives some or all of the DFIB from the first AP 320 first, and controls when the second AP 330 transmits DFIB or new DL frames to the STA 310.

If DL Forwarding subfield 402 has a value of 2, first AP 320 forwards the DFIB to the second AP 330 and to the STA 310. The value of 2 further indicates that the STA 310 can receive the DFIB from the first AP 320 and the second AP 330 at the same time. This does not necessarily mean that the STA 310 must always receive data at the same time, but at least at some point, STA 310 has the ability to do so. In this case, the first AP 320 and the second AP 330 maintain continuous SNs in their respective DL transmit buffers so that duplicate DFIB can be distinguished at the STA 310. Since DFIB transmitted to the STA 310 have the same SNs in both DL transmit buffers, the STA may detect and eliminate duplicated DFIB received from the first AP 320 and the second AP 330 based on the SNs assigned to the DFIB. In this case, the second AP 330 or a second AP MLD 330 can increase the SN for each newly received DL frames.

If DL Forwarding subfield 402 has a value of 3, the first AP 320 does not forward the DFIB to the second AP 330 so that DFIB is received by STA 310 only from the first AP 320.

In some embodiments, STA 310 can set separate values (e.g., forwarding rules) for the DL Forwarding subfield 402 that corresponds to respective traffic identifiers (TIDs).

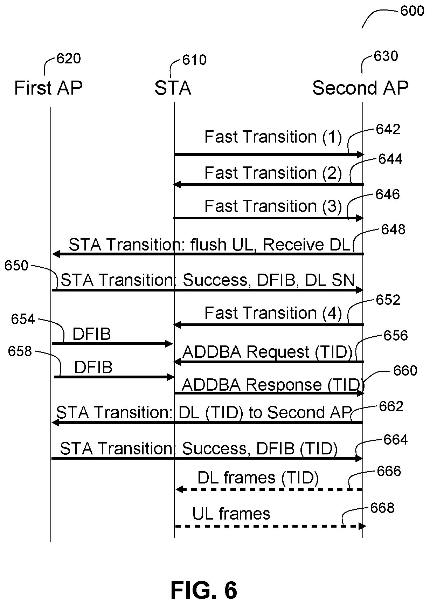

FIG. 6 illustrates an example of a sequence diagram 600 for conditional DL data forwarding for AP-assisted AP transition, according to some embodiments of the disclosure. The sequence diagram 600 explains the situation where DL Forwarding subfield 402 (e.g., a forwarding rule) has a value of 1. For explanation purposes and not a limitation, FIG. 6 may be described with reference to elements from other figures in the disclosure. For example, a STA 610 may be the STA 110, a first AP 620 may be the first AP 120, and a second AP 630 may be the second AP 130 of system 100. In the sequence diagram 600, the STA 610 transitions from the first AP 620 to the second AP 630. In the sequence diagram 600, operations corresponding to operations 340 through 348 in FIG. 3, which are performed prior to operation 642, are not shown for simplicity.

At operations 642, 644, and 646, the STA 610 and the second AP 630 exchange Fast Transition frames (1), (2), and (3). As described with regard to FIG. 3, Fast Transition frame (3) or any other frames sent from the STA 610 to the second AP 630 before the transition may include the Data Transition Control Field 400, which includes DL Forwarding subfield 402 with a value of 1.

At operations 648 and 650, the second AP 630 and the first AP 620 exchange the STA transition messages. At operation 648, the second AP 630 transmits an instruction to the first AP 620 to flush the UL data at the first AP 620 to the internet (e.g., transmit via router 140 of FIG. 1 to the internet) and send the DFIB to the second AP 620 so that the second AP receives the DFIB. The first AP 620 recognizes the received instruction (e.g., as the forwarding rule) and sends the DFIB with SNs as a success status of the STA Transition message.

At operation 652, the second AP 630 transmits a Fast Transition frame (4) to the STA 610 as an indication of a completion of the transition.

At operations 654 and 658, the first AP 620 transmits the DFIB to the STA 610 intermittently.

At operation 656, the second AP 630 transmits Add Block Ack Request (ADDBA request) request with TID. By indicating the TID, the second AP 630 may control whether the sender of the DL frames is the first AP 620 or the second AP 630 based on the type of data (e.g., voice, video, background, best effort.)

At operation 660, the STA transmits an ADDBA response regarding the TID. In this way, the STA 610 can inform the second AP 630 about the status of DFIB reception from the first AP 620. The STA 610 may transmit the ADDBA response when the STA 610 determines that the first AP 620 has sent all DFIB, or a portion of the DFIB via the communication link with the first AP that deteriorates. In this way, the STA 610 controls the time to switch the sender of the DL frames (e.g., from first AP 620 to second AP 630.).

At operations 662 and 664, the second AP 630 and the first AP 620 exchange the STA transition messages. At operation 662, the second AP 630 transmits an instruction to the first AP 620 to stop the transmission of the DFIB associated with the TID so that the second AP 630 can begin to transmit the DL frames corresponding with the TID to the STA 610. At operation 664, the first AP 620 transmits the success status and the DFIB associated with the TID to the second AP 630.

At operation 666, the second AP 630 transmits the DFIB received from the first AP 620 and any newly received DL frames to the STA 610.

At operation 668, the STA 610 transmits UL data to the second AP 630.

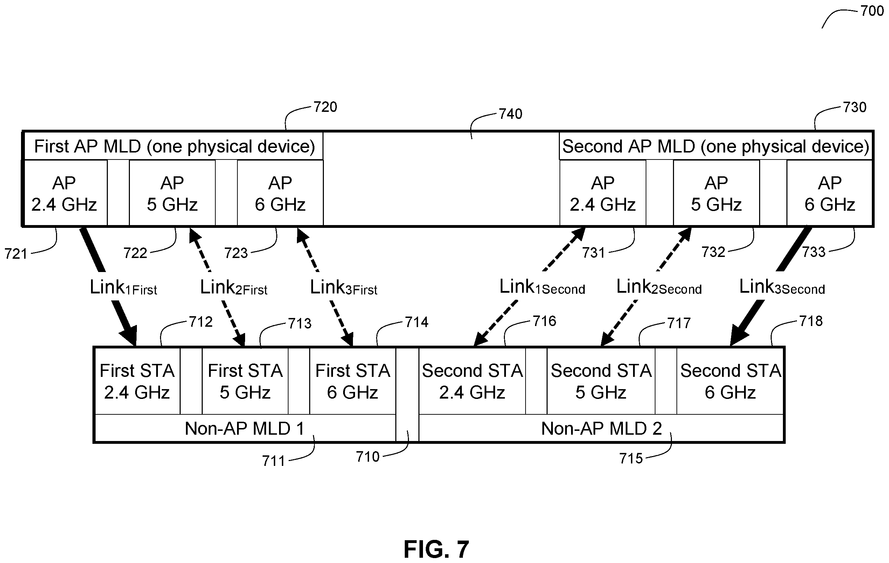

FIG. 7 illustrates an example system 700 for simultaneous DL data reception from first and second APs for AP-assisted AP transition, in accordance with some embodiments of the disclosure. For explanation purposes and not a limitation, FIG. 7 may be described with reference to elements from other figures in the disclosure. For example, an enhanced non-AP MLD (e.g., non-AP eMI,D) 710 may be the STA 110, first AP MLD 720 may be the first AP 120, and a second AP MLD 730 may be the second AP 130 of system 100. In some embodiments, an enhanced AP MLD (AP eMLD 740) includes the first AP MLD 720 and the second AP MLD 730. The AP eMLD 740 can represent a hierarchical layer that can be used by Wi-Fi 8 devices. For example, AP eMLD 740 can include a MAC address to which association and authentication is bound. In other words, the same authentication and individual addressed frame encryption can be used for the physically different AP MLDs and APs (e.g., first AP MLD 720 and second AP MLD 730) that may not be collocated in AP eMLD 740. Similarly, non-AP eMLD 710 can include non-AP MLD 1 711 and non-AP MLD2 715.

In some embodiments, example system 700, non-AP eMLD 710 can transition from the first AP MLD 720 to the second AP MLD 730. The system 700 supports an example where DL Forwarding subfield 402 has a value of 2. The system 700 illustrates communication between the non-AP eMLD 710, the first AP MLD 720, and the second AP MLD 730. The non-AP eMLD 710 can be one physical device, including non-AP MLD1 711 and non-AP MLD2 715. APs 721, 722, and 723 of the first AP MLD 720 communicate with first STAs 712, 713, and 714 of the non-AP MLD1 711 using 2.4 GHz, 5 GHz, and 6 GHz links. APs 731, 732, and 733 of the second AP MLD 730 communicate with second STAs 716, 717, and 718 of the non-AP MLD2 715 using 2.4 GHz, 5 GHz, and 6 GHz links.

Assume that the links between the first AP MLD 720 and the non-AP MLD1 711 are insufficient to continue the communication. For example, 5 and 6 GHz links RSSI are insufficient to send data efficiently. Therefore, the non-AP eMLD 710 may transition from the first AP MLD 720 to the second AP MLD 730. After the transition, at least one of APs 732 and 733 of the second AP MLD 730 communicate with at least one of second STAs 717 and 718 of the non-AP MLD2 715 using 5 GHz, and 6 GHz links.

Subsequently, the non-AP eMLD 710 may try to obtain the DFIB from the first AP MLD 720 through the 2.4 GHz link by using first STA 712, and the second AP MLD 730 through the 6 GHz link using second STA 718, simultaneously. This operation can be achieved because DL Forwarding subfield 402 transmitted from the second AP MLD 730 to the first AP MLD 720 has a value of 2, and the first AP MLD 720 transmits the DFIB to the second AP MLD 730. As already explained, in this case, the first AP MLD 720 and the second AP MLD 730 maintain continuous SNs in their DL transmit buffers so that duplicate DFIB can be distinguished at the non-AP eMLD 710. Thus, forwarded DFIB retain the same SNs in the respective DL transmit buffers. The non-AP eMLD 710 may eliminate duplicated DL frames received from the first AP MLD 720 and the second AP MLD 730 based on the SNs assigned to the DL frames. In this case, the second AP MLD 730 increases the SN for each newly received DL frames. As such, non-AP eMLD 710 may receive the DL frames in a faster way (e.g., faster than when DL Forwarding subfield 402 value = 1 where the DFIB is first received from the first AP 620, and then subsequently from the second AP 630 of FIG. 6.)

In the example shown in FIG. 7, the system 700 is configured with MLD devices to show the situation where DL Forwarding subfield 402 has a value of 2. However, the application of the present disclosure is not limited to this example. The system 700 can be configured with non-MLD devices or a combination of non-MLD devices and MLD devices. The system 700 can be also configured with ordinary MLDs, so that MLDs are not included in eMLD.

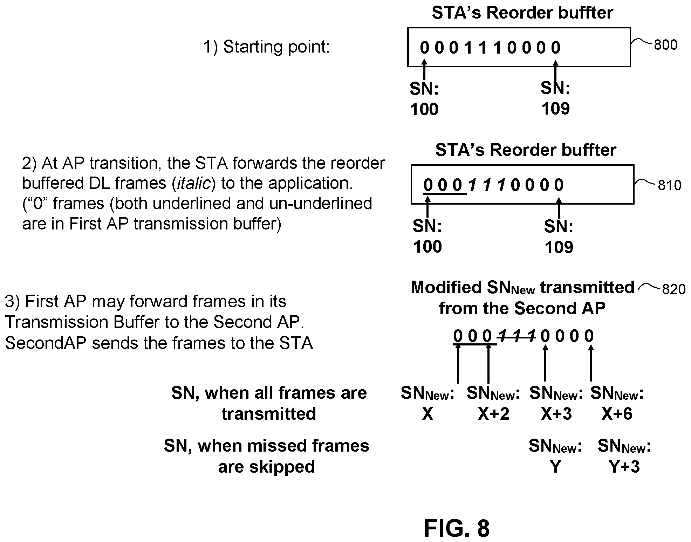

FIG. 8 illustrates an example of resetting sequence numbers (SNs) in a station's (STA's) reorder buffer 800 for AP-assisted AP transition, according to some embodiments of the disclosure. For explanation purposes and not a limitation, FIG. 8 may be described with reference to elements from other figures in the disclosure. For example, a reorder buffer 800 and 810 may be the DL reorder buffer 112. FIG. 8 explains the situation where the DL Forwarding subfield 402's value is not 2 because if the value is 2, the second AP 130 maintains the continuous SN value of the first AP 120 of FIG. 1.

The reorder buffer 800 has stored the smallest received SN and the reorder buffer 800 contains a bitmap of sequence numbers (SN) from the smallest received SN, where each bit represents the state of the buffer at a starting point where the transition has not been started. A "0" in the reorder buffer 800 indicates that the MPDU with the matching SN has not been received by STA 110, while a "1" indicates that the MPDU has been received by STA 110. The payload of each received MPDU is also stored by the receiver. The SNs are listed in ascending order from left to right in this example. Therefore, the reorder buffer 800 indicates that the STA 110 has not received the DFIB of SNs 100-102 and 106-109, but has received the DFIB corresponding to SNs 103-105. SNs are STA and TID specific. Each transmitted data unit (e.g., a Media access control (MAC) Protocol Data Unit (MPDU)) increases SN with value 1.

The reorder buffer 810 represents the state of the buffer at the transition. If the second AP 130 does not maintain continuous SNs with the first AP 120, the second AP 130 assigns a new SN value to all DL frames that the second AP 130 transmits. Whether the second AP 130 maintains continuous SN may be determined based on the DL SN Maintenance subfield 404 of Data Transition Control field 400 of FIG. 4. In this case, the STA 110 forwards the received DFIB corresponding to SNs 103-105 (shown in italics) to application 150 when the STA 110 starts to receive data from the second AP 130. The DFIB not received by the STA 110 might have been stored in the DL transmission buffer 122 of the first AP 120.

Example 820 illustrates two methods for SN reset numbering by the second AP 130, to transmit the DFIB to the STA 110, where the DFIB has been forwarded from the first AP 120 to the second AP 130. In the first method, the first AP 120 may forward DFIB not yet received by STA 110 (e.g., SNs 100-102 and SNs 106-109) in DL Transmission buffer 122 to the second AP 130. Accordingly, the second AP 130 assigns SNs starting from a value "X" to the forwarded frames. Here, X is any number from 0-4095. In this way, some data may be duplicates at the STA, but the duplicated data might be eliminated by using Block Ack buffer management.

In the second method, the first AP 120 may skip the missed data (e.g., SNs 100-102), that have an SN that is less than the received DFIB's SN (e.g., SNs 103-105.) Accordingly, the first AP 120 forwards DFIB corresponding to SNs that are greater than (e.g., SNs 106-109) the received DFIB (e.g., SNs 103-105.) Accordingly, the second AP assigns SNs starting from a value "Y" to the forwarded frame. Here, Y is any number from 0-4095.

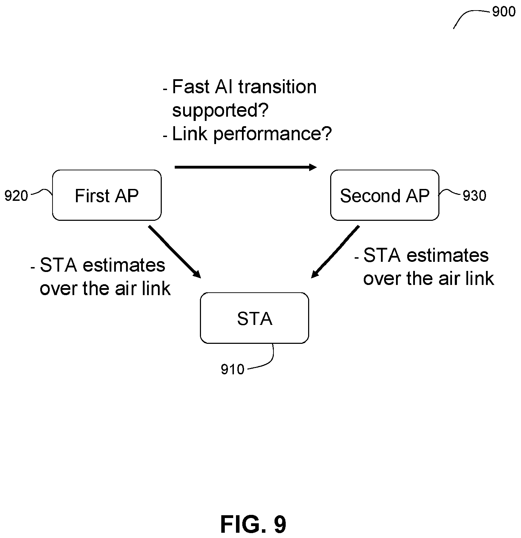

FIG. 9 illustrates an example 900 of a selection of an AP from which a STA receives DL frames for AP-assisted AP transition, according to some embodiments of the disclosure. FIG. 9 may illustrate how the STA queries available transition method based on an estimation of a throughput of the second AP, delays, etc. In other words, example 900 illustrates how the STA 910 determines a forwarding rule indicating how the STA 910 receives DFIB buffered at first AP 920. For explanation purposes and not a limitation, FIG. 9 may be described with reference to elements from other figures in the disclosure. For example, a STA 910 may be the STA 110, a first AP 920 may be the first AP 120, and a second AP 930 may be the second AP 130 of system 100.

The STA 910 tries to transition from the first AP 920 to the second AP 930. The STA 910 may select the AP from which to receive the DFIB based on a link performance of the first AP 920 and the second AP 930. To determine the link performance, the STA 910 estimates the throughput between the STA 910 and the first AP 920 based on the throughput of a test data set or past data sets. The STA 910 also estimates the throughput between the STA 910 and the second AP 930 based on the throughput of a test data set or past data sets.

The STA 910 further estimates the link performance between the first AP 920 and the second AP 930. For the estimation of the link performance between the first AP 920 and the second AP 930, the STA exchanges Basic Service Set (BSS) Transition Management (BTM) messages with the first AP 920. The STA 910 may retrieve unknown information, such as whether APs support the Fast AP transition (Fast Transition) by exchanging BTM messages. Details of BTM messages are described in detail below.

If link performance is considered to be representative of throughput, the STA 910 determines the forwarding rule so that DFIB is received over the path with the highest throughput. For example, STA 910 may set the forwarding rule to receive DFIB from the second AP 930 if the following conditions are true:
(1) an estimated throughput between the first AP 920 and the second AP 930 is greater than a throughput between the first AP 920 and the STA 910; and
(2) a throughput between the second AP 930 and the STA 910 is greater than a throughput between the first AP 920 and the STA 910.

In other words, when the two conditions are satisfied, STA 910 may set the forwarding rule to receive the DFIB from the second AP 930 by setting the value "0" or "1" to the DL Forwarding subfield 402.

Although throughput is used here as an example of link performance, link performance can be represented by values other than throughput. In other words, the STA 910 can determine the forwarding rule by considering factors other than throughput. Examples of factors to be considered include power consumption of the STA 910 when communicating with the APs, power consumption of the entire network, and traffic delay. This information can be retrieved using the BTM messages. Thus, link performance means information about the link required for transition.

In some embodiments, the BTM messages may provide AP transition delay. The delay describes the maximum delay to get data transmission ongoing in the second AP. The STA 910 may use this information to time the transition and to estimate possible frame loss for low latency applications.

FIG. 10 illustrates an example of a sequence diagram 1000 for obtaining candidate APs for AP-assisted AP transition, according to some embodiments of the disclosure. For explanation purposes and not a limitation, FIG. 10 may be described with reference to elements from other figures in the disclosure. For example, the STA 1010 may be the STA 110 or STA 910, and first AP 1020 may be the first AP 120 or first AP 920, and a second AP (not shown) may be the second AP 130 or second AP 930. The STA 1010 may need to obtain information as to whether the first AP 1020 can assist with an AP transition to the second AP 930 (not shown) (e.g., if the Fast AP transition messages are supported) and how efficient data forwarding is between the first AP 1020 and the second AP 930. The STA 1010 may determine whether neighboring APs support Fast AP transition from Beacons, Probe Responses, and/or Association Response frames. The STA 1010 may also receive information as to whether the neighboring APs support Fast AP transition and the information for estimating the link performance, such as the power consumption of the STA 1010 when communicating with the neighboring APs, the power consumption of the entire network, and the traffic delay.

At operation 1032, the STA 1010 transmits a BTM Query frame to the first AP 1020 to query an AP transition performance with selected candidate second AP(s). Information indicating the second AP(s) candidate may be contained in the BTM Query frame.

At operation 1034, the first AP 1020 transmits a BTM request frame. The BTM request frame can include a candidate list. The candidate list can be a list of Neighbor Report elements specifying candidate second APs for transition. The Neighbor Report elements may include an AP Transition Parameters subelement corresponding to a candidate second AP to indicate whether the first AP 1020 may perform enhanced AP transition, e.g., an AP-assisted AP transition (e.g., including Fast Transition and possible data forwarding). The AP Transition Parameters subelement may also indicate the second AP 930 transmission rate (throughput) of the first AP 1020 and the second AP 930, link type information between the first AP 1020 and the second AP 930, and a delay of the first AP 1020 and the second AP 930 transition.

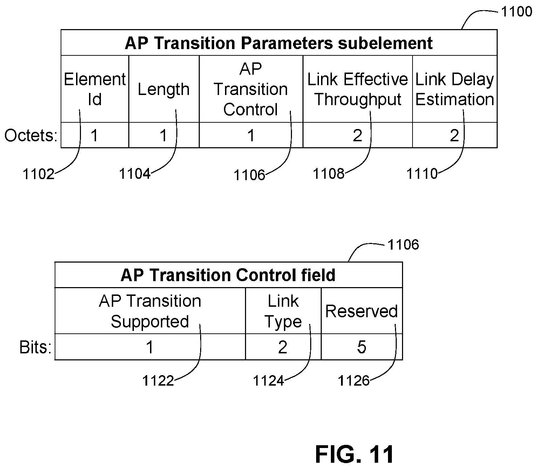

FIG. 11 illustrates example signaling of AP Transition Parameters for AP-assisted AP transition, according to some embodiments of the disclosure. For explanation purposes and not a limitation, FIG. 11 may be described with reference to elements from other figures in the disclosure such as FIG. 9 and FIG. 10. AP Transition Parameters subelement 1100 can include Element Id field 1102, Length field 1104, AP Transition Control field 1106, Link Effective Throughput field 1108, and Link Switch Delay Estimation element field 1110.

Element ID field 1102 indicates the ID of the element and can be assigned one octet. Length field 1104 indicates a length of the AP Transition Parameters subelement 1100 and can be assigned one octet.

AP Transition Control field 1106 indicates the link performance between the first AP 1020 and the second AP 930. The lower half of FIG. 11 explains AP Transition Control field 1106 in detail. AP Transition Control field 1106 contains AP Transition supported subfield 1122, Link type subfield 1124, and a reserved subfield 1126. The reserved subfield 1126 is reserved for future use and can be assigned five bits.

AP Transition supported subfield 1122 indicates whether the first AP 1020 may perform enhanced AP transition to the second AP 930. AP Transition supported subfield 1122 is assigned one bit. As an example, when the bit value = 0, the first AP 1020 may not perform enhanced AP transition to the second AP 930, and when the bit value = 1, the first AP 1020 may perform enhanced AP transition to the second AP 930.

By referring to Link type subfield 1124, the STA 1010 may retrieve.

Link Type subfield 1124 indicates a type of connection between the first AP 1020 and the second AP 930. Link type subfield 1124 is assigned two bits, where the bit value = 0 can indicate that the connection is wireless, the bit value = 1 can indicate that the connection is wired, and the bit value = 2 can indicate that the connection type is unknown. By referring to Link type subfield 1124, the STA may estimate the power consumption of the STA 1010 when communicating with the second AP 930, second AP 930's transition capability, and the power consumption of the entire network.

Link Effective Throughput field 1108 indicates the throughput between the first AP (e.g., first AP 920) and the second AP (e.g., second AP 930.) Link Effective Throughput field 1108 is assigned two octets. By referring Link Effective Throughput field 1108, the STA 1010 may estimate the throughput between the first AP 1020 and the second AP 930.

Link Switch Delay Estimation field 1110 indicates a delay to transition between the first AP 1020 and the second AP 930. The delay can be expressed in units of one hundred µs. By referring to Link Switch Delay Estimation field 1110, the STA may estimate the link delay between the first AP 1020 and the second AP 930.

Returning to FIG. 10, at operation 1036, the STA 1010 may transmit a BTM Response frame to the first AP 1020 to indicate whether the STA 1010 will transition to the second AP 930. Transmitting the BTM response frame is optional, but a BTM response frame may help a network to prepare for the coming AP transition. By receiving the BTM response from the STA 1010, the first AP 1020 may forward useful information (e.g., QoS rules used in the communication between the first AP 1020 and the STA 1010) to the second AP 930.

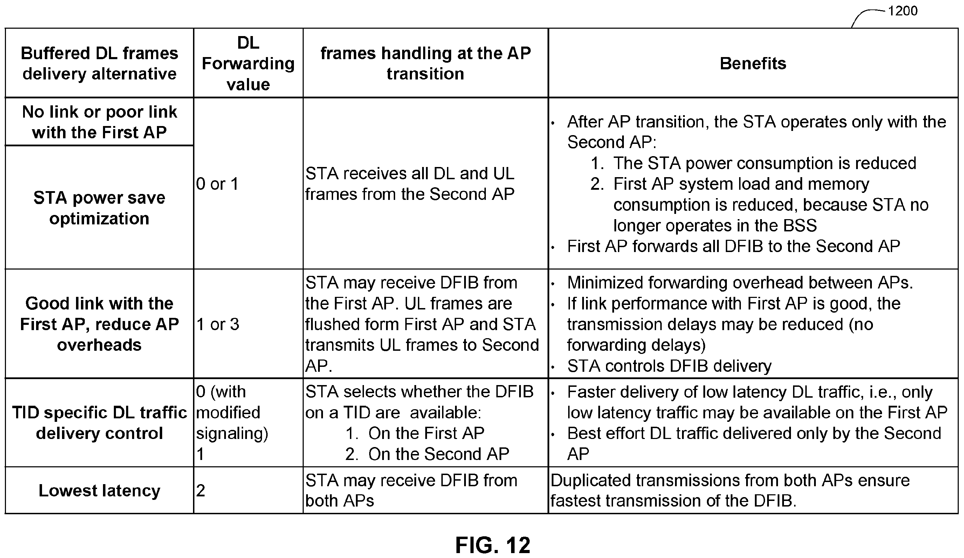

FIG. 12 illustrates examples 1200 of DL traffic delivery recommendations for AP-assisted AP transition, according to some embodiments of the disclosure. FIG. 12 may illustrate how the STA signals how buffered DL frames are transmitted. FIG. 12 may be described with reference to elements from other figures in the disclosure. For example, a STA may be the STA 110, a first AP may be the first AP 120, and a second AP may be the second AP 130. Example 1200 is a table that describes recommendations on how the STA 110, having retrieved link performance information, determines a forwarding rule for obtaining DFIB from the first AP 120 after transitioning to the second AP 130.

If the STA 110 determines that a link between the STA 110 and the first AP 120 is poor, in some embodiments, the STA 110 set the forwarding rule (e.g., DL Forwarding subfield 402 value 0 or 1.) In this way, the STA 110 can receive the DFIB from the second AP 130 rather than from the first AP 120 with the poor link. As previously explained, even if the value is set to 1, the STA 110 can choose to receive the DFIB from the second AP by using the ADDBA Response. In addition, since the STA 110 does not need to communicate with the first AP 120 after the transition, a power consumption of the STA 110 may be reduced. In addition, system load and memory consumption of the first AP 120 are reduced because the STA 110 no longer operates in the same BSS. Since DL Forwarding subfield 402 has the value of 0 or 1, the first AP 120 forwards all DFIB to the second AP 130 without using the poor link.

If the STA 110 determines that the STA 110 needs power save optimization, in some embodiments, the STA 110 set the value 0 or 1 to DL Forwarding subfield 402. This is because the STA 110 does not need to communicate with the first AP after the transition, and the power consumption of the STA 110 may be reduced.

If the STA 110 determines that there is a good link between the STA 110 and the first AP, and the overhead between APs needs to be reduced (e.g., the link between the first AP and the second AP is poor, needs to minimize a forwarding delay, etc.,), in some embodiments, the STA 110 can set the value 1 or 3 to DL Forwarding subfield 402. In this way, the STA 110 may receive the DFIB from the first AP. In addition, the forwarding data between the first and second APs is reduced or almost equal to zero, thus reducing the overhead of the transfer. The overall network transfer delay is improved because of better link performance between the STA 110 and the first AP. As already explained, even if the value is set to 1, the STA 110 can choose to receive the DFIB from the second AP by using the ADDBA Response.

If the STA 110 determines that the STA 110 needs to control a DL traffic based on TIDs, in some embodiments, the STA 110 sets the value 0 only to the specific TID, or 1 to DL Forwarding subfield 402. In this way, the STA 110 can select whether to receive DFIB from the first AP or the second AP according to the TID. In this way, the STA 110 can also properly control the source of DFIB in special situations, such as if the first AP can only carry low-latency traffic or if the STA 110 wants to receive best-effort data only from the second AP.

If the STA 110 determines that the lowest latency is required, in some embodiments, the STA 110 can set the value 2. In this way, the STA 110 may receive DFIB from both APs, so that the duplicated transmissions from both APs ensure fastest transmission of the data.

In some embodiments described above (e.g., FIG. 3, FIG. 6), Fast Transition frames (1) through (4) can be used to perform transitions, in other words, to prepare for associations. In preparation of an association, setups of Unicast keys and STA/AP capabilities and parameters are performed. In addition, after the association, setups of BAs and traffic stream settings with Stream Classification Service (SCS) and power safe flows with Target Wake Time (TWT) may be performed. In some embodiments, AP transition signaling for some systems between the STA and AP may be via 1 or 2 messages, where the transition signaling specifies a forwarding rule for the DFIB.

In some embodiments, an AP-Assisted AP transition can also be applied to systems that use other methods to prepare for associations. Examples of such systems are (1) Mobility Domain enhancements (2) systems using Enhanced AP MLD (AP eMLD).

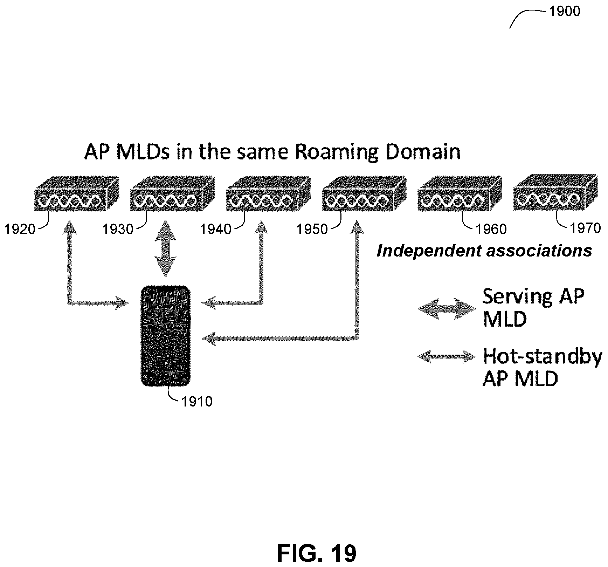

FIG. 19 illustrates an example system 1900 for Mobility Domain enhancements, according to some embodiments of the disclosure. For explanation purposes and not a limitation, FIG. 19 may be described with reference to elements from other figures in the disclosure. For example, a non-AP MLD 1910 may be the STA 110, and first AP MLD 1930 (e.g., a serving AP MLD) may be the first AP 120, and AP-MLDs 1920, 1940, and 1950 (e.g., Hot-Stand-by AP MLDs) may be the second AP 130. The non-AP MLD 1910, first AP MLD 1930, AP-MLDs 1920, 1940, 1950 in Hot-Stand-by, and other AP MLDs 1960 and 1970 can be in the same Roaming Domain to utilize the Mobility Domain enhancements. The non-AP MLD 1910 can include two or more STAs. The non-AP MLD 1910 can communicate with first AP 1930 as a serving AP MLD, and also create a "Hot-stand-by" with potential second AP-MLDs 1920, 1940, and 1950, as candidate APs under the Mobility Domain enhancements. In some embodiments, the Mobility Domain enhancements that include "Hot-stand-by" associations can be used to perform AP-assisted AP transition as the non-AP MLD 1910 transitions from the AP MLD 1930 to one of the AP-MLDs 1920, 1940, and 1950.

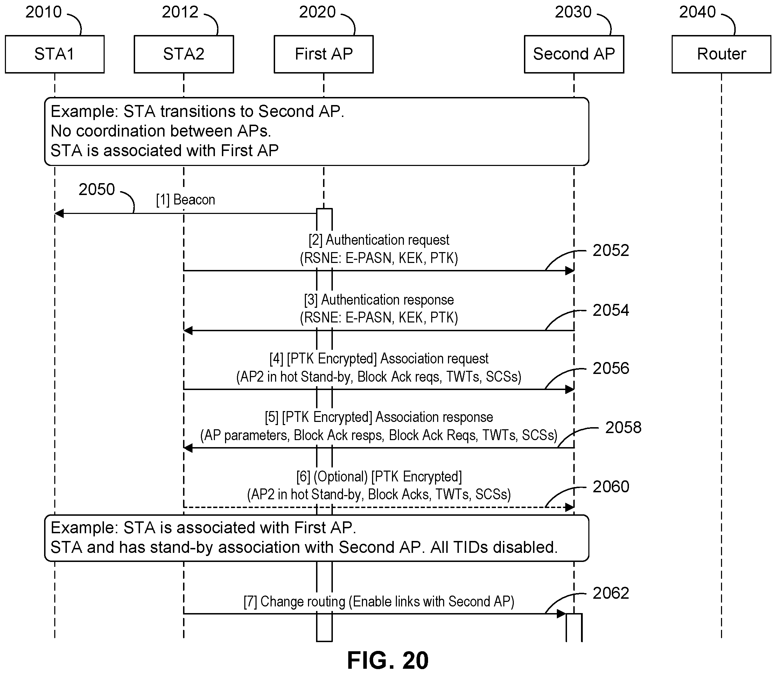

FIG. 20 illustrates an example of a sequence diagram 2000 for Mobility Domain enhancements system for AP-assisted AP transition, according to some embodiments of the disclosure. For explanation purposes and not a limitation, FIG. 20 may be described with reference to elements from other figures in the disclosure. For example, STA1 2010 and STA2 2012 may be STAs within a non-AP MLD such as the STA 110 of FIG. 1 or non-AP MLD 1910 of FIG. 19, an first AP 2020 may be the first AP 120 of FIG. 1 or first AP MLD 1930, a second AP 2030 may be the second AP 130 of FIG. 1 or the second AP MLD 1940, and a router 2040 may be the router 140 of system 100. In the sequence diagram 2000, the STA 2012 transitions from the first AP 2020 to the second AP 2030. In the sequence diagram 2000, the STA 2012 is associated with the first AP 2020 as a serving AP MLD using Mobility Domain enhancements system. STAs 2010 and 2012 are associated with the second AP 2030 as a Hot-stand by AP MLD using Mobility Domain enhancements system.

At operation 2050, the first AP 2020 emits a beacon frame and the STA 2010 receives the beacon frame. In response to the beacon frame, the STA 2010 initiates the transition by using the STA 2012.

At operations 2052 through 2060, the STA 2012 and the second AP 2030 exchange messages to setup signaling to establish a Hot-Stand-by association according to a Mobility Domain enhancement architecture of FIG. 19. For example, the STA 2012 and the second AP 2030 can reuse Pairwise Master Key Identifier (PMKID) and set up an independent association. Exchanging the Authentication messages and Pairwise Transient Key (PTK) Encrypted Authentication messages is the similar operation to the exchanging the Fast Transition frames (e.g., FIG. 3 and FIG. 6), but in Mobility Domain enhancements system the second AP 2030 is left to Hot-stand-by state (e.g., routing is not changed and second AP 2030 does not send or receive data.)

At operation 2052, an Authentication request can be sent from the STA 2012 to the second AP 2030 that includes STA capabilities and operation parameters, Robust Security Network Elements (RSNE) to signal STA security settings, STA pair-wise-master-key identifier PMKID, Base Authentication and Key Management Protocol (AKMP).

At operation 2054, the AP 2030 uses PMKID to fetch the cached authentication parameters of the STA and uses them to construct and send an Authentication response to the STA 2012 includes RSNE of the AP, Key Encryption Key (KEK), and parameters needed to derive Pair-wise Transient Key (PTK) to be in use for association.

At operation 2056, PTK Encrypted Association request, i.e. a protected management frame, can be sent from the STA 2012 to the second AP 2030 that includes information indicating that the second AP 2030 is in Hot-Stand-by, Block Acknowledgement Request parameters, Target Wake Time (TWT) power save parameters, and Stream Classification Service (SCSs) DL traffic mappings to the specific TID and UL, DL and P2P QoS Characteristics information of the flows. PTK Encrypted Association response sent from the second AP 2030 to the STA 2012 at operation 2058 includes second AP 2030's capabilities and operation parameters, Block Acknowledgement Responses, Block Acknowledgement Requests, TWTs, and SCSs. PTK Encrypted Authentication response optionally sent from the STA 2012 to the second AP at operation 2060 includes information indicating that the second AP 2030 is in Hot-Stand-by, Block Acknowledgements, TWTs, and SCSs.

After the association request and association response exchange, the STA 2012 and second AP 2030 have signaled all QoS settings and TWT power save flows that are currently ongoing in the first AP. These settings are not taken into use, when the STA transitions to operation with the second AP 2030.

At operation 2062, the STA 2012 transmits Change routing message to the second AP 2030 causing the transition from first AP 2020 to second AP 2030. After transmitting the Change routing message, the router 2040 starts to deliver frames to second AP 2030. In some embodiments Change routing message (or any other frames or messages sent from the STA 2012 to the second AP 2030 during the transition) includes the DL Forwarding subfield 402 or information equivalent to the DL Forwarding subfield. The Change Routing message also takes the preconfigured QoS, power save, BA, etc. settings into use on transmissions between STA 2012 and the second AP 2030. After the operation 2062, DFIB or UL frames in the first AP 2020 may be transmitted to the second AP 2030, and the STA 2012 may cause the first AP 2020 to flush first AP 2020's UL reorder buffer (or first AP 2020's UL reorder buffer is flushed at the transition).

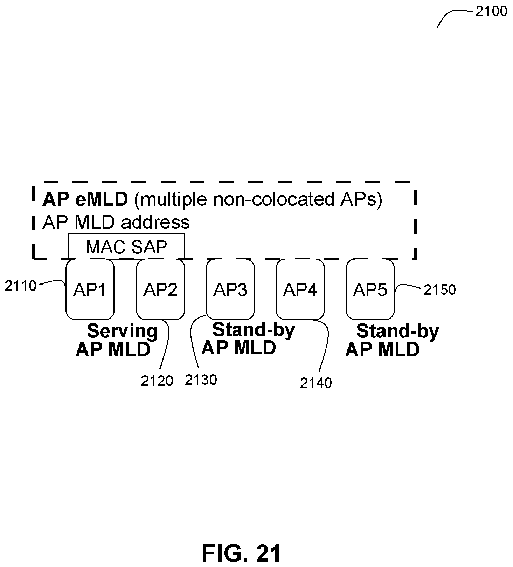

FIG. 21 illustrates an example 2100 of an Enhanced AP MLD (AP eMLD) architecture, according to some embodiments of the disclosure. The AP MLDs 2100 includes serving AP-MLDs 2110 and 2120, stand-by AP MLDs 2130 and 2140, and a stand-by AP-MLD 2150. For explanation purposes and not a limitation, FIG. 21 may be described with reference to elements from other figures in the disclosure. For example, the serving AP-MLDs 2110 and 2120 may be the first AP 120, the stand-by AP MLDs 2130 and 2140 and a stand-by AP-MLD 2150 may be the second AP 130, and a STA (not shown) may be the STA 110. The serving AP-MLDs 2110 and 2120 can be in the same physical device, while the stand-by AP MLDs 2130 and 2140 can be together in a different physical device. The serving AP-MLDs 2110 and 2012, the stand-by AP MLDs 2130 and 2140, and the stand-by AP 2150 can belong to the same AP enhanced MLD (eMLD) layer to create an AP eMLD. The AP eMLD layer is a hierarchical layer used by Wi-Fi devices. The AP eMLD has an eMLD MAC address to which association and authentication is bound where the same authentication and individual addressed frames encryption in use for all AP MLDs and APs in AP eMI,D. Actual links between STA (not shown) can be established with at least one of the AP MLDs, but the serving AP-MLDs 2110 and 2120, the stand-by AP MLDs 2130 and 2140, and the stand-by AP 2150 are within the same AP eMLD virtual device as multiple non-collocated APs. The serving AP-MLDs 2110 and 2120 establish the link with the STA and using their eMLD MAC address as MAC Sublayer to the upper layer (SAP).

The Enhanced AP MLD (AP eMLD) architecture is also illustrated in FIG. 7. FIG. 7 may be described with reference to elements from other figures in the disclosure. For example, the two of APs 721, 722, and 723 of the first AP MLD 720 may be the serving AP-MLDs 2110 and 2120, and two of the APs 731, 732, and 733 of the second AP MLD 720 may be the stand-by AP MLDs 2130 and 2140. In other words, the first AP 720 is the serving MLD, the second AP 730 is the stand-by AP MLD, and the first AP 720 and the second AP 730 creates the AP eMLD. As such, non-AP eMLD 710 including the first STAs 712, 713, and 714 of the non-AP MLD 1 711, and second STAs 716, 717, and 718 of the non-AP MLD 2 715, transitions from the first AP MLD 720 to the second AP MLD 730.

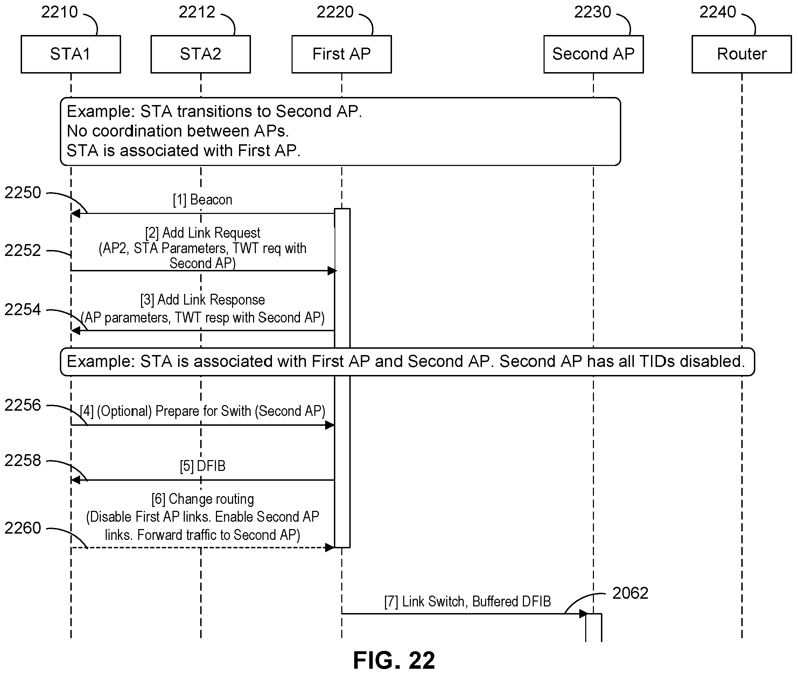

FIG. 22 illustrates an example of a sequence diagram 2200 for an AP eMLD system for AP-assisted AP transition, according to some embodiments of the disclosure. For explanation purposes and not a limitation, FIG. 22 may be described with reference to elements from other figures in the disclosure. For example, STA 2210 and 2212 may be the STA 110, or non-AP MLD1 711 and non-AP MLD2 715 of non-AP eMLD 710 of FIG. 7. A first AP 2220 may be the first AP 120, or first AP MLD 720. A second AP 2230 may be the second AP 130 or second AP MLD 730, and a router 2240 may be the router 140 of system 100. In the sequence diagram 2200, the STA 2210 and 2212 transition from the first AP 2220 to the second AP 2230. In the sequence diagram 2200, the STA 2210 and the STA 2212 are included in one non-AP eMLD device (e.g., non-AP eMLD 710 of FIG. 7.) In the sequence diagram 2200, the first AP 2220 and the second AP 2230 can belong to the same AP eMLD virtual layer (e.g., AP eMLD 740 of FIG. 7.)

At operation 2250, the first AP 2220 emits a beacon frame and the STA 2210 (e.g., non-AP MLD 1 711 of non-AP eMLD 710) receives the beacon frame. In response to the beacon frame, the non-AP eMLD 710 device, including the STA 2210 (e.g., non-AP MLD 1 711) and the STA 2212 (e.g., non-AP MLD 2 715), initiates the transition by using the STA 2212 (e.g., non-AP MLD 2 715.)

In some embodiments, operations 2252 and 2254 create links with second AP 2230 through the first AP 2220. The setup signaling can be for an enhanced MLD architecture (e.g., FIG. 7 or FIG. 22) and be used instead of the Fast Transition signaling (e.g., FIG. 3 and FIG. 6.)

At operation 2252, the STA 2210 transmits Add Link Request frame to the first AP 2220 as one of the AP transition signaling. The Add Link Request frame includes second AP 2230's identification information, parameters of STA 2210, and a TWT request with the second AP 2220.

At operation 2254, the first AP 2220 transmits Add link Response frame to the STA 2210. The Add link Response frame includes the first AP 2220's and/or the second AP 2230's parameters and TWT response with the second AP 2230. Alternatively, the STA 2210 may send TWT Request to the first AP 2220 and request TWT setup to the link(s) of the second AP 2230. The first AP 2220 may transmit TWT Setup frame as a response of whether the TWT flow setup was successful.

At operation 2256, the STA 2210 optionally transmits pre-switch signaling to the first AP 2220 indicating that the STA 2210 will transition to the second AP 2230. In some embodiments, at operation 2256, the STA 2210 further transmits the DL Forwarding subfield 402 or information equivalent to the DL Forwarding subfield to notify the first AP 2020 a forwarding rule. Accordingly, the first AP 2220 can begin forwarding DFIB to second AP 2230. In other words, the first AP 2220 may send forwarded data (e.g., DFIB) to the STA 2210 and the second AP 2230. The second AP 2230 gets a copy of DFIB addressed to the STA 2210 and when STA transitions to the second AP 2230, then second AP will have data immediately available for the STA. In some embodiments, operation 2256 is similar to the BTM Query frame signaling of FIG. 3 and FIG. 10.

At operation 2258, the first AP transmits the DFIB to the STA 2210.

At operation 2260, the STA 2210 transmits Change routing message to disable a link between the STA 2210 and the first AP 2220 and enable a link between the STA 2210 and the second AP 2230. As such, after the operation 2260, the traffic originally occurred between the router 2240 and the first AP 2220 is forwarded to the second AP 2230.

For simplicity, the example shows non-AP eMLD to have only 1 STA communicating with and first AP MLD and 1 STA communicating with the second AP MLD. In practice, there may be multiple links setup with first AP MDL and the second AP MLD.

At operation 2260, the STA 2210 further transmits the DL Forwarding subfield 402 or information equivalent to the DL Forwarding subfield to notify the first AP 2020 a forwarding rule. If the DL Forwarding subfield 402 or information equivalent to the DL Forwarding subfield has been sent at operation 2256, transmitting of the DL Forwarding subfield 402 or information equivalent to the DL Forwarding subfield is optional.

At operation 2262, the first AP 2220 transmits the information of link switching (transition) and may transmits the DFIB in accordance with the forwarding rule (e.g., to second AP 2230.) In some embodiments, at operation 2262, the first AP transmit the forwarding rule to the second AP to notify the second AP 2230 a forwarding rule so that the second AP 2230 transmits the DFIB to the STA 2212 accordingly. The first AP 2220 can deliver the first AP 2220's reorder buffer to the second AP 2230, or the link switch signaling may cause the first AP 2220's reorder buffer to be flushed. Router 2240 starts to deliver frames to second AP 2230. STA 2012 may begin transmitting and receiving UL and DL frames with second AP 2230.

If the STA 2210 optionally transmits pre-switch signaling at operation 2256, then the transition signaling may only include the current reorder buffer bitmap status of the first AP. The second AP may have received a copy of STA DL traffic and the second AP uses the DL reorder buffer status to detect the missing frames from the STA. The second AP may forward the according to the re-order buffer status information the frames that were stored in the first AP, if the DL forwarding rule signaled that the second AP may send reorder buffered frames to the Internet.

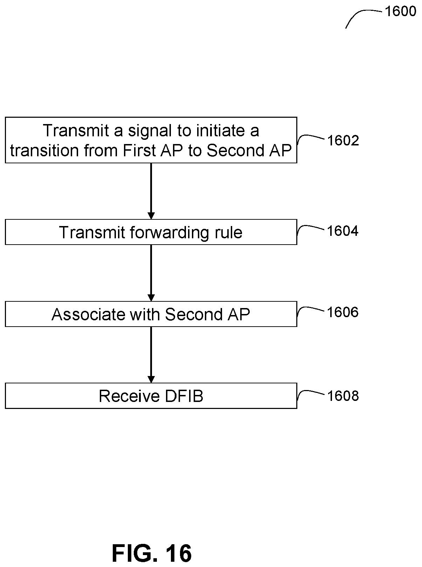

FIG. 16 illustrates an example method 1600 for a STA in AP-assisted AP transition, according to some embodiments of the disclosure. For explanation purposes and not a limitation, method 1600 may be described with reference to elements from other figures in the disclosure. For example, method 1600 may be performed by a STA including but not limited to the STA 110. The STA may communicate with a first AP including but not limited to the first AP 120. The STA may communicate with a second AP including but not limited to the second AP 130.

At operation 1602, the STA transmits a signal to initiate a transition from the first AP to the second AP (e.g., Fast Transition frame (1) in operation 350 of FIG. 3, or Fast Transition frame (1) in operation 642 of FIG. 6.)

At operation 1604, the STA transmits a forwarding rule to the second AP (e.g., Fast Transition frame (3) in operation 354 of FIG. 3 or Fast Transition frame (3) in operation 646 of FIG. 6 that includes DL forwarding subfield 402 of FIG. 4.)

At operation 1606, the STA associates with the second AP (e.g., Fast Transition frame (4) in operation 360 of FIG. 3, or Fast Transition frame (4) in operation 652 of FIG. 6.)

At operation 1608, the STA receives the DFIB in accordance with the forwarding rule (e.g., DFIB in operation 362 of FIG. 3, or DFIB in operations 654, 658, or 666 of FIG. 6.)

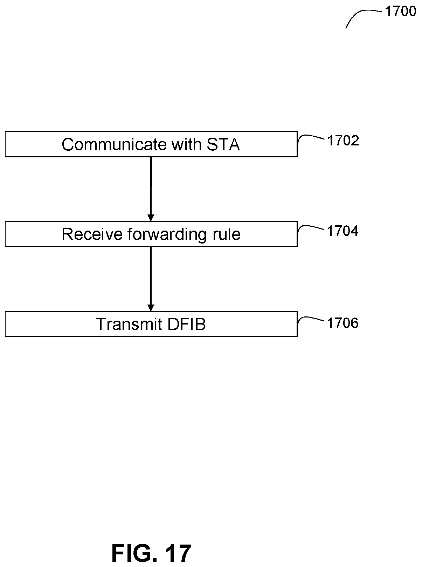

FIG. 17 illustrates an example method 1700 for a first AP in AP-assisted AP transition, according to some embodiments of the disclosure. For explanation purposes and not a limitation, method 1700 may be described with reference to elements from other figures in the disclosure. For example, method 1700 may be performed by a first AP including but not limited to the first AP 120. The first AP may communicate with the STA including but not limited to the STA 110. The first AP may communicate with a second AP including but not limited to the second AP 130.

At operation 1702, the first AP communicates with the STA (e.g., BTM messages in operations 344, 346, or 348 of FIG. 3, or any communications before the transition.)

At operation 1704, the first AP receives a forwarding rule from the second AP (e.g., the STA Transition in operation 356 of FIG. 3, or the STA Transition in operation 648 of FIG. 6.)

At operation 1706, the first AP transmits the DFIB (e.g., DFIB in operation 362 of FIG. 3, or DFIB in operation 654 or 658 of FIG. 6.)

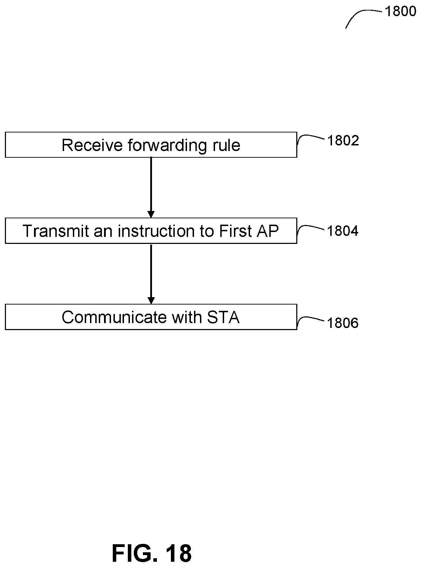

FIG. 18 illustrates an example method 1800 for a second AP in AP-assisted AP transition, according to some embodiments of the disclosure. For explanation purposes and not a limitation, method 1800 may be described with reference to elements from other figures in the disclosure. For example, method 1800 may be performed by a second AP including but not limited to the second AP 130. The second AP may communicate with the STA including but not limited to the STA 110. The second AP may communicate with a first AP including but not limited to the second AP 130.

At operation 1802, the second AP receives a forwarding rule from the STA (e.g., Fast Transition frame (3) in operation 354 of FIG. 3 or Fast Transition frame (3) in operation 646 of FIG. 6 that includes DL forwarding subfield 402 of FIG. 4.)

At operation 1804, the second AP transmits an instruction to a first AP in accordance with the forwarding rule (e.g., the STA Transition in operation 356 of FIG. 3, or the STA Transition in operation 648 of FIG. 6.)

At operation 1806, the second AP communicates with the STA (e.g., UL Data in operation 364 or DL frames in operation 366 of FIG. 3, or DL frames in operation 666 or UL frames in operation 668 of FIG. 6.)

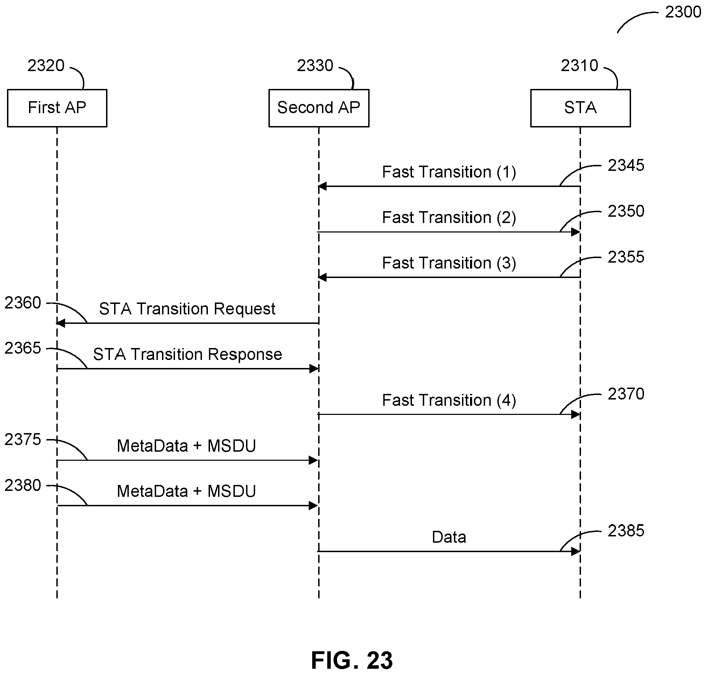

FIG. 23 illustrates an example of a sequence diagram 2300 for an AP-assisted AP transition, according to some embodiments of the disclosure. FIGS. 23-24C may illustrate a signaling during the transition, where the STA 2310 specifies how SN is maintained before and after the transition. The sequence diagram 2300 may explain the situation where a STA 2310 initiates a transition from a first AP 2320 to a second AP 2330, and the second AP 2330 transmits a STA Transition Request frame at operation 2360 to the first AP 2320. In response, the first AP 2320 transmits a STA Transition Response frame at operation 2365 to the second AP 2330 to exchange the information for the AP transition. FIG. 23 may provide an overview of each signaling used for the AP transition, and a more detailed description may be provided below.

For explanation purposes and not a limitation, FIG. 23 may be described with reference to elements from other figures in the disclosure including but not limited to FIGS. 1, 7, 9, and 19. For example, a STA 2310 may be the STA 110, the non-AP MLD1 711 or non-AP MLD2 715 of non-AP eMLD 710, the STA 910, or the non-AP MLD 1910. For example, the first AP 2320 may be the first AP 120, or first AP MLD 720, the first AP 920, or the first AP MLD 1930. For example, the second AP 2330 may be the second AP 130, the second AP MLD 730, the second AP 930, or the second AP MLD 1940. In the sequence diagram 2300, the STA 2310 transitions from the first AP 2320 to the second AP 2330. In the sequence diagram 2300, operations corresponding to operations 340 through 348 in FIG. 3 can be performed prior to operation 2345, and are not shown for simplicity.

At operations 2345, 2350, and 2355, the STA 2310 and the second AP 2330 may exchange the Fast Transition frames (1), (2), and (3). As described with regard to FIG. 3, the Fast Transition frame (3) (e.g., a Re-association request frame or a request for roaming) or any other frames sent from the STA 2310 to the second AP 2330 before the transition may include the Data Transition Control Field 400 of FIG. 4 as a control signal. As such, the Fast Transition frame (3) can set parameters for the STA Transition Request frame.

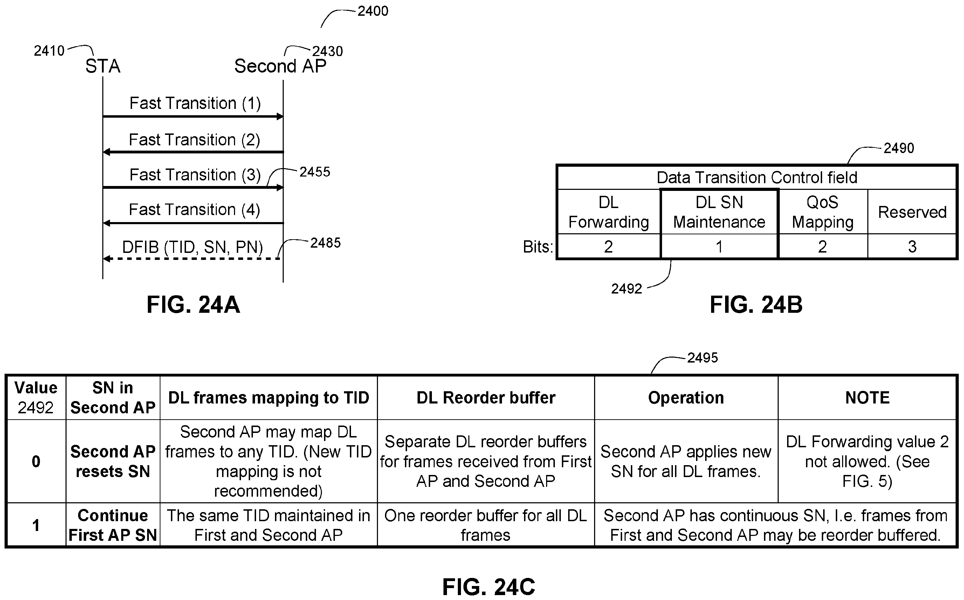

At operation 2360, the second AP 2330 may assist in the transition by transmitting the STA Transition Request frame to the first AP 2320. The STA Transition Request frame may include an address of the first AP 2320 and informs the first AP 2320 that STA 2310 is transitioning to second AP 2330. The STA Transition Request frame may include rules for operations in the second AP 2330. The rules for operations may include rules indicated in the Data Transition Control Field 400. The rules indicated in the Data Transition Control Field 400 may include but are not limited to: *i*) a DL frames forwarding rule indicated in the DL Forwarding subfield 402; *ii*) an SN maintenance rule indicated in the DL SN Maintenance subfield 404; and/or *iii*) a QoS mapping rule indicated in the QoS Mapping subfield 406. In other words, the STA Transition Request frame in operation 2360 may be a transition request signal including an indication for SN maintenance for a DL transmission from the second AP 2330 to the STA 2310. Details of the SN maintenance are described below in FIGS. 24A-31.

At operation 2365, the first AP 2320 may assist in the transition by transmitting the STA Transition Response frame to the second AP 2330. The STA Transition Response frame may signal a success status whether the STA 2310 is now associated with the second AP 2330 as well as responses corresponding to the contents of the STA Transition Request frame, namely the DL frames forwarding rule, the SN maintenance rule, and/or the QoS mapping rule.

If the STA Transition Request frame at operation 2360 included a DL frames forwarding rule indicating that the DFIB in the first AP 2320 are requested to be forwarded to the second AP 2330 (e.g., the values of the DL Forwarding subfield 402 Forwarding to second AP; Available from first or second AP, or on one AP at a time; or Available from both first and second AP at the same time as described in FIG. 5), the STA Transition Response frame may signal information regarding the SN, a packet number (PN), and a number of Media Access Control (MAC) service data units (MSDUs) in a host buffer of the first AP 2320 that have no SN or PN assigned. For example, the information regarding the SN may include the highest SN value of the DFIB per TID. The information regarding the PN may include the highest PN value of the DFIB per TID. Details of the DL frames forwarding are described above in FIGS. 3-12.

If the STA Transition Request frame at operation 2360 included an SN maintenance rule, the STA Transition response can include the SN utilized by the first AP 2320 to assign the SN to the DFIB.

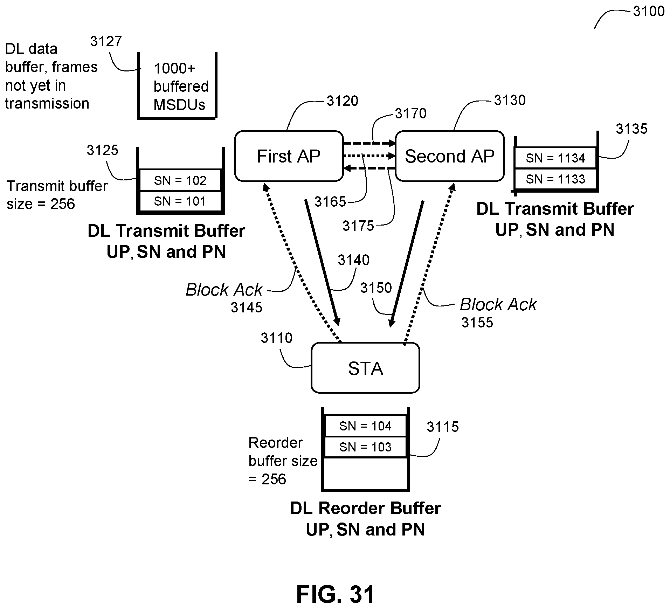

If the STA Transition Request frame at operation 2360 included the QoS mapping rule, the STA Transition Response frame may include corresponding QoS configuration information. The QoS configuration information may include SCS QoS mapping rules for explicitly signaled rules for the QoS mapping. In some examples, the QoS configuration information may include a mirrored stream classification service (MSCS) tuple per TID as a learned rule for the QoS mapping. Details of the SCS QoS mapping rules, the MSCS tuple for the TID, and the SN utilized by the first AP are described below in FIGS. 31-35.

At operation 2370, the second AP 2330 may transmit the Fast Transition frame (4) (e.g., a Re-association Response) to the STA 2310. The Fast Transition frame (4) may signal a response of the second AP 2330 to the STA 2310. The response may include an indication of a completion of the transition.

At operations 2375 and 2380, if the DFIB in the first AP 2320 are requested to be forwarded to the second AP 2330, the first AP 2320 may transmit the DFIB (MSDU) together with a MetaData to the second AP 2330. The MetaData may contain the SN, PN, and TID of the MSDU. Details of the MetaData are described below.

At operation 2385, the second AP 2330, transmits the DL transmission to the STA 2310. The DL transmission may include the DFIB received from the first AP 2320 and the DL frames received from the internet. In some embodiments, the DL transmission may include a next SN that is a continuation of an SN utilized by the first AP, according to the SN maintenance rule. The SN utilized by the first AP can be signaled in the STA Transition Response at operation 2365.

FIGS. 24A- 24C correspond to the SN maintenance in an AP assisted AP transition. FIG. 24A illustrates an example of a sequence diagram 2400 for SN maintenance in AP-assisted AP transition, according to some embodiments of the disclosure. The sequence diagram 2400 may explain details of the situation where a STA 2410, initiating a transition from a first AP to a second AP 2430, transmits the DL SN Maintenance subfield of the Data Transition Control Field 2490 to the second AP 2430.

For explanation purposes and not a limitation, FIG. 24A may be described with reference to elements from other figures in the disclosure including but not limited to FIG. 23. For example, the STA 2410 may be the STA 2310, and the second AP 2430 may be the second AP 2330. In the sequence diagram 2400, the STA 2410 transitions from a first AP to the second AP 2330. In the sequence diagram 2400, operations corresponding to operations 340 through 348 in FIG. 3, which are performed prior to a Fast Transition frame (1), are not shown for simplicity.

At operation 2455, the STA 2410 may transmit a Fast Transition Frame (3) to the second AP 2430. As described with regard to FIG. 3, the Fast Transition frame (3) or any other frames sent from the STA 2410 to the second AP 2430 before the transition may include the Data Transition Control Field 2490 of FIG. 24B. At operation 2485, the second AP 2430 may transmit a DFIB to the STA 2410.

FIG. 24B illustrates an example of STA controlled signaling for AP-assisted AP transition, according to some embodiments of the disclosure. For explanation purposes and not a limitation, FIG. 24B may be described with reference to elements from FIG. 24A. For example, STA 2410 may transmit a signal to second AP 2430 such as Data Transition Control field 2490 that includes a DL SN Maintenance subfield 2492. As explained in FIG. 4, the DL SN Maintenance subfield may indicate how SNs of the DFIB buffered in the DL transmit buffer of the first AP are maintained or renumbered in the second AP 2430. The Data Transition Control field 2490 may be transmitted in the Fast transition frame (3) in operation 2455 of FIG. 24A.

FIG. 24C illustrates examples 2495 of STA controlled DL SN Maintenance for AP-assisted AP transition, according to some embodiments of the disclosure. For explanation purposes and not a limitation, FIG. 24C may be described with reference to elements from FIGs. 24A and 24B. For example, STA 2410 may transmit the Data Transition Control field 2490 to second AP 2430 and values of the DL SN Maintenance subfield 2492 of the Transition Control field 2490 can be explained by the example 2495.

In some embodiments, when the DL SN Maintenance subfield 2492 (e.g., indication for SN maintenance) equals, for example, but not limited to, 0 or means that the second AP 2430 may reset the SN, so that the second AP 2430 may not maintain the SN utilized by the first AP. In other words, the second AP 2430 applies a different SN for all DL frames including DFIB forwarded from the first AP to the second AP 2430 and DL frames received from the internet. Accordingly, the second AP 2430 may also map DFIB and DL frames received from the internet, for example, according to RFC 8325 by using default Differentiated Services Code Point (DSCP) to User Priority (UP) mapping or if DSCP values are not present, the frames may be mapped to the TID that matches to the DSCP value 0. If the second AP 2430 resets the SN, the STA 2410 utilizes separate DL reorder buffers for the DL transmission (frames) received from the second AP 2430 and a DL transmission (frames) received from the first AP 2420. In some examples, if the second AP 2430 resets the SN, value 2 of the DL Forwarding value of FIG. 5 (meaning that the DFIB of the first AP are transmitted to STA 2410 from both first and second AP 2430 at the same time) may not be allowed. If second AP 2430 assigns new SNs to the DFIB from the first AP, the STA 2410 may receive duplicated DFIB.

In some embodiments, when the DL SN Maintenance subfield 2492 (e.g., indication for SN maintenance) equals, for example, but not limited to, 1 or means that the second AP 2430 may continue the SN, the second AP 2430 may maintain the SN utilized by the first AP. In other words, the second AP 2430 may apply continuous SN for all DL frames. Since the SNs are maintained in the first AP and the second AP 2430, the same TIDs may be maintained in the first AP and the second AP 2430. Since the SNs are maintained in the first AP and the second AP 2430, the STA 2410 may reorder the DL transmission received from the second AP 2430 and the DL transmission received from the first AP 2420 using the single reorder buffer for specific TID. In other words, if the TID is the same, the STA 2410 can buffer the DL transmission received from the second AP 2430 and the DL transmission received from the first AP 2420 in the single reorder buffer.

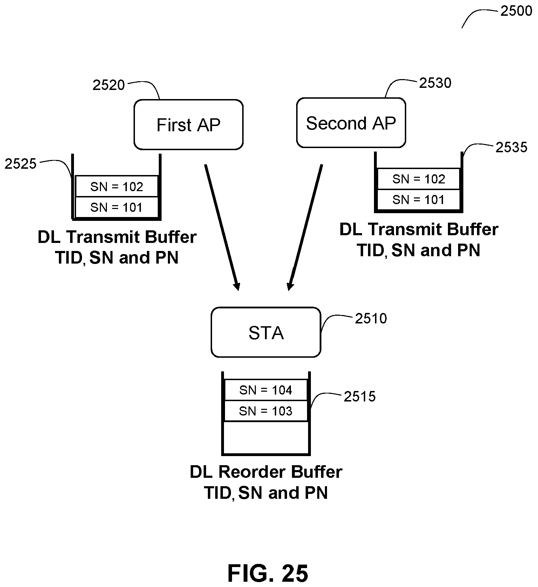

FIG. 25 illustrates an example system 2500 for AP-assisted AP transition for an explanation of a DL SN maintenance, in accordance with some embodiments of the disclosure. FIG. 25 may be described with reference to elements from other figures in the disclosure including but not limited to FIG. 23. For example, the STA 2510 may be the STA 2310, the first AP 2420 may be the first AP 2320, and the second AP 2430 may be the second AP 2330.

In some embodiments, STA 2510 can reorder the received MSDUs from the first AP 2520 and the second AP 2530 may allow retransmissions and lossless frames delivery in AP transition. For example, even if the STA 2510 did not receive the MPDUs with SNs 101 and 102 from the first AP 2520 before the transition, the STA 2510 may receive the MPDUs with SNs 101 and 102 from the second AP 2530.

To improve the efficiency of AP transitions using single the reorder buffer per TID described above or other efficiency improvements, the TID, SN, and PN of the MSDU from the first AP 2520 and the second AP 2530 are the same for transmitted frame. As explained using FIG 24C, setting the DL SN Maintenance subfield value to 1 may be one of the ways to match the TID, SN, and PN of the MSDU. The TID may be used for determining a QoS class and defining an SN space of the MSDU. The SN may be used for defining the MSDU order in the SN space, The PN may be used for detecting an unauthorized MSDU duplicate. A pair-wise transient key (PTK) which is specific to the first AP 2520 and the second AP 2530, may be used for encrypting and decrypting the DL transmission received from the first AP 2520 or the DL transmission received from the second AP 2530.

Because the SNs are continuously maintained before and after the transition, the STA 2510 may have a single reorder buffer 2515 per TID for reordering MSDUs from the DL transmission received from the first AP 2520 and the DL transmission received from the second AP 2530. As shown in FIG. 25, the reorder buffer 2515 buffers MSDUs with SN of 103 and 104 but is missing MSDUs with SN of 101 and 102. The first AP 2520 may have a DL transmit buffer 2525 for buffering the DL transmission transmitted from the first AP 2520 to the STA 2510. The second AP 2530 may have a DL transmit buffer 2535 for buffering the DL transmission transmitted from the second AP 2530 to the STA 2510 including MSDUs forwarded from the first AP 2520. The reorder buffer 2515, the DL transmit buffer 2525 and the DL transmit buffer 2535 may correspond to one specific TID of the MSDU. The reorder buffer 2515, the DL transmit buffer 2525 and the DL transmit buffer 2535 buffer the MPDUs in accordance with the SNs and the PNs of the MSDUs.

The STA 2510 may reorder the DL transmission received from the first AP 2520 and the DL transmission received from the second AP 2530 to detect MPDUs not received by the STA 2510. The MPDU may contain a MAC header (SN, PN, TID, PTK, etc.) and MSDU(s). For example, the reorder buffer 2515 indicates that MPDUs with SNs 103 and 104 are buffered in the reorder buffer 2515, but the MPDUs with SNs 101 and 102 are not buffered. In response to the status of the reorder buffer 2515, the STA 2510 may transmit a BA to the first AP 2520 or the second AP 2530 to indicate the MPDUs not received by the STA 2510.

The STA 2510 may reorder the DL transmission received from the first AP 2520 and the DL transmission received from the second AP 2530 to detect duplicated MPDUs. If the second AP 2530 maintains the continuous SN utilized by the first AP 2520, the STA may detect the duplicated MPDUs even if the DL transmission received from the first AP 2520 and the DL transmission received from the second AP 2530 contain the same MPDU.

The STA 2510 may reorder the DL transmission received from the first AP 2520 and the DL transmission received from the second AP 2530 to order the MPDUs to correct order. Since an application of the STA 2510 may require the MPDUs in the correct order, the STA 2510 orders the MPDUs in accordance with the SNs.

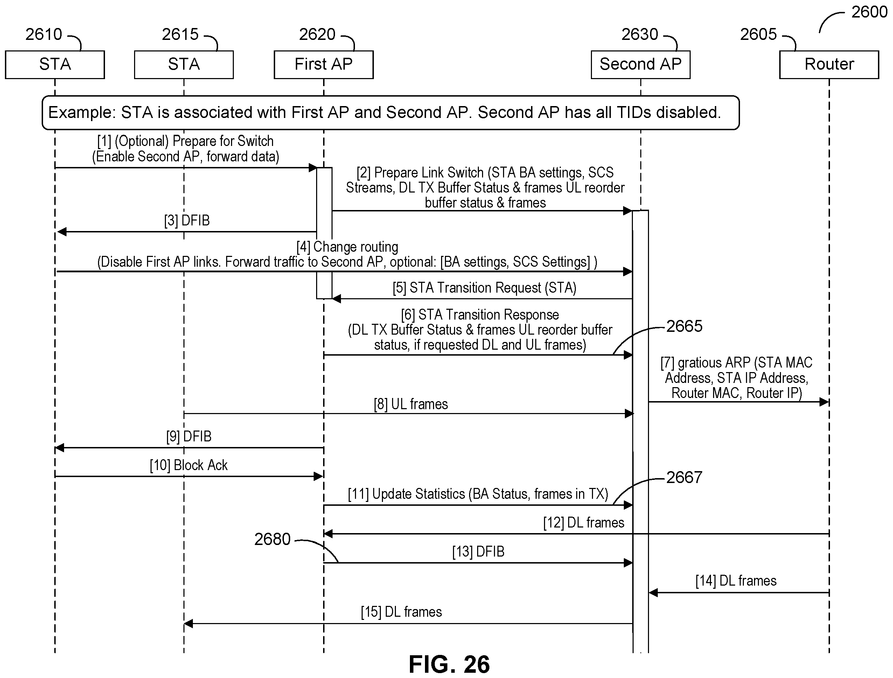

FIG. 26 illustrates an example of a sequence diagram 2600 for AP-assisted AP transition, according to some embodiments of the disclosure. For explanation purposes and not a limitation, FIG. 26 may be described with reference to elements from other figures in the disclosure including but not limited to FIG. 23. For example, the STA 2610 and the STA 2615 may be the STA 2310, the first AP 2620 may be the first AP 2320, and the second AP 2630 may be the second AP 2330. In another example, STA 2610 and STA 2615 may belong to a non-AP eMLD such as non-AP eMLD 710 where STA 2610 corresponds to non-AP MLD 1 711, and STA 2615 corresponds to non-AP MLD 2 715 of FIG. 7. First AP 2620 and second AP 2630 can belong to an AP eMLD such as AP eMLD 740, where first AP 2620 can be first AP MLD 720, and second AP 2630 can be second AP MLD 730.

In the sequence diagram 2600, the STA 2610 can be operating on a link with first AP 2620, and the STA 2615 can be operating on a link with second AP 2630. In this example, the non-AP eMLD that includes the STA 2610 and the STA 2615, transitions from the first AP 2620 to the second AP 2630.

In the sequence diagram 2600, it is assumed that the SN in the first AP 2620 and the second AP 2630 is continuous. In other words, the value of the DL SN maintenance subfield 2492 of FIG. 24B may be set to 1. For the sake of simplicity, it is omitted, but assumed that before operation 2665, operations substantially similar to operations 2345 to 2360 described in FIG. 23 have been completed. A STA Transition Request is signaled from second AP 2630 to the first AP 2620 shown by [5].

At operation 2665, which can be substantially similar to the operation 2365 in FIG. 23, the first AP 2620 may transmit a STA Transition Response frame to the second AP 2630. The STA Transition Response frame may contain a status and information of frames buffered in a DL transmit buffer of the first AP 2620 to allow the second AP 2630 to maintain a next SN for continuous SN for the DL transmission received from the second AP 2630. For example, the second AP can determine the next SN after the highest SN used by the first AP 2620. The STA Transition Response frame may also contain UL reorder buffer status. The UL reorder buffer status may include the received frames sequence numbers, the SN of the transmitted UL, and SN of frames that are transmitted, but to which no acknowledgement or block acknowledgement (BA) is received. The UL reorder buffer statistics may be reported for each TID separately. In a simplified format, the UL reorder buffer statistics may be just the information of the received UL frames. The UL reorder buffer statistics may be provided in the similar format as in BA, by using an SN of the first non-received frame and a bitmap of received frames. At operation 2665, the first AP may further transmit an initial update statistics frame to the second AP 2630. The initial update statistics frame may contain parameters to allocate continuous SN/PN/TID values as applied in the first AP 2620 to DL frames received by the second AP 2630 from the router 2605.

At operation 2667, the first AP 2620 may transmit an update statistics frame to the second AP 2630. The update statistics frame is transmitted if both the first AP 2620 and the second AP 2630 may transmit the DL transmission received from the first AP 2620 or the DL transmission received from the second AP 2630 to the STA 2610. The update statistics frame transmitted by the first AP 2620 may signal a status of frames in transmission from the first AP 2620 to the STA 2610 and a status of received frames. Similarly, update statistics frame transmitted by the second AP 2630 signals respective information (not shown in the figure) for the second AP 2630. As shown in FIG 26, the update statistics frame may contain the information based on a status of BA ([10] Block Ack) received from the STA 2610 and information of the DL frames that are in transmission to the STA 2610. The second AP 2630, as a receiving AP of the update statistics frame, may combine the information indicated in the update statistics frame with the transmit status and receive status of the DL transmission received from the second AP 2630.

At operation 2680, which can be substantially similar to operation 2375 or 2380 in FIG. 23, the first AP 2620 may transmit the DFIB destined for the STA 2610 to the second AP 2630. The DFIB may contain the MetaData. Details of the MetaData are described below.

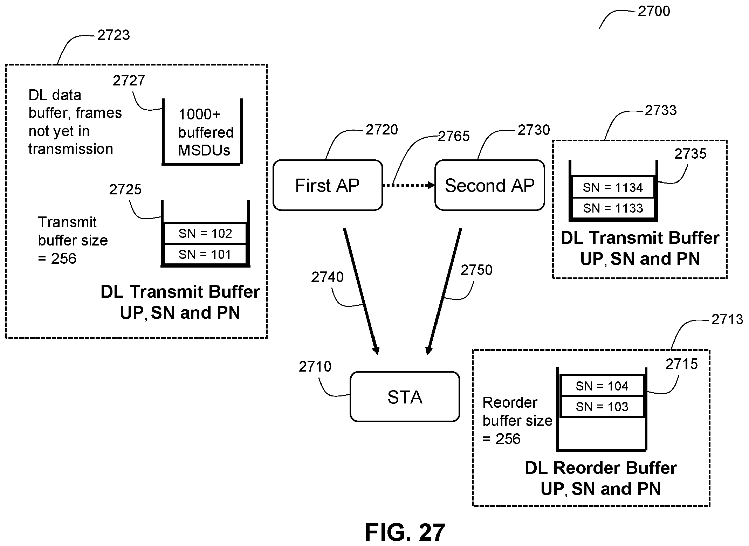

FIG. 27 illustrates an example system 2700 for AP-assisted AP transition for an explanation of DL SN maintenance, in accordance with some embodiments of the disclosure. The exemplary details of how to include the SN and PN utilized by a first AP in a STA Transition Response frame, in operation 2365 in FIG. 23 and operation 2665 in FIG. 26 are explained in FIG. 27.

FIG. 27 may be described with reference to elements from other figures in the disclosure including but not limited to FIG. 23. For example, the STA 2710 may be the STA 2310, the first AP 2720 may be the first AP 2320, and the second AP 2730 may be the second AP 2330. Further, a STA Transmission Response frame 2765 may be the STA Transmission Response frame in operation 2365 of FIG. 23.

DL frames initially buffered at a first AP (DFIB) 2723 can be DL frames stored at the first AP 2720 before a handover occurs to the second AP 2730. The DFIB 2723 can include DL frames in DL transmit buffer 2725 in transmission, and/or DL frames in DL data buffer 2727 not yet in transmission. Contents of DL transmit buffer 2725 may be transmitted to STA 2710 via the DL transmission 2740..

*DL frames buffered at a second AP* 2733 can include DL frames received from a network (e.g., from router 140 of FIG. 1) shown as frames with SN=1133 and SN=1134 in DL transmit buffer 2735. For example, when a DL forwarding rule of a control signal indicates that the first AP 2720 transmits *DL frames buffered at a second AP* 2733 to the STA 2710 (e.g., DL forwarding rule value=3 of FIG. 5), *DL frames buffered at a second AP* 2733 can include DL frames received from a network (e.g., from router 140 of FIG. 1).

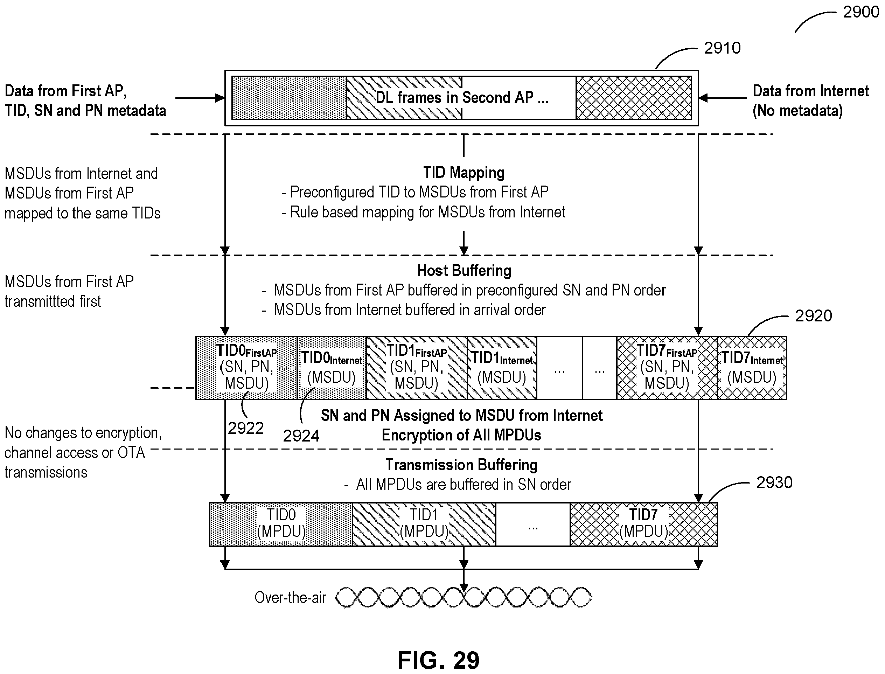

Though not shown, when a DL forwarding rule of a control signal indicates that the first AP 2720 and/or the second AP 2730 transmits DFIB 2723 to the STA 2710 (e.g., DL forwarding rule values=0, 1, and/or 2 of FIG. 5), *DL frames buffered at a second AP* 2733 can include DL frames received from a network (e.g., from router 140 of FIG. 1) as well as DL frames and/or portions of DL frames forwarded from the first AP 2720 to the second AP 2730, namely, all or portions of DFIB 2723. DL frames received by the second AP 2730 from a network can be referred to as DL frames initially buffered at a second AP. In some embodiments, the second AP 2730 can buffer the DFIB 2723 according to the SN and PN order within *DL frames buffered at a secondAP* 2733 according to TIDs (e.g., TID0-TID7). When a DL frame from the network with a given TID (e.g., TID0) is received, the second AP 2730 can buffer the DL frames with TID0 of DFIB 2723 followed by the DL frame from the network with TID0 within *DL frames buffered at a second AP* 2733. (*See* FIG. 29.)

Contents of the DL transmit buffer 2735 may be transmitted to STA 2710 via the DL transmission 2750.

*DL frames buffered at a STA* 2713 can include DL frames received by STA 2710 from the first AP 2720 and/or the second AP 2730. *DL frames buffered at a STA* 2713 can include DL frames stored in one or more DL reorder buffers that correspond to one or more TIDs (and hence one or more user priorities (UPs.) For example, reorder buffer 2715 may correspond to a given TID (e.g., TID0) where reorder buffer 2715 reorders DL frames corresponding to TID0 that are received via the DL transmission 2740 and/or the DL transmission 2750. Though not shown, *DL frames buffered at a STA* 2713, could include additional reorder buffers corresponding to other TID values. If, for example, reorder buffer 2715, the DL transmit buffer 2725 and the DL transmit buffer 2735 are specific to TID0 of an MPDU, the reorder buffer 2715, the DL transmit buffer 2725, and the DL transmit buffer 2735 can arrange the MPDUs in accordance with the SNs and the PNs of the MPDUs. In some embodiments, an MPDU of reorder buffer 2715 corresponding to TID0 can include MSDUs forwarded from the first AP 2720 to the second AP 2730 that precede MSDUs received by the second AP 2720 from the network.

The first AP 2720 may transmit the STA Transition Response frame 2765 to the second AP 2730 in response to an indication from the STA 2710 that indicates that the second AP 2730 maintain the SN series used by the first AP 2720 after the transition (e.g., in response to a STA Transition Request frame). The STA Transition Response frame 2765 may contain a last assigned SN and PN. In other words, the first AP transmits the largest located SN or PN per TID or UP (TID and UP may collectively be referred to simply as UP). As shown in FIG. 27, the first AP 2720 may assign SNs and PNs to over 1000 buffered MSDUs in the DL data buffer 2727. In this example system 2700, the first AP 2720 may indicate the last assigned SN is 1132 and last assigned PN is 5552 for a specific UP in the STA Transition Response frame 2765.

In response to the STA Transition Response frame 2765, the second AP 2730 assigns the next SN as 1133 (allocated SN +1) and the next PN as 5553 (allocated PN +1) per the UP to the DL frames buffered in the DL transmit buffer 2735. In other words, the second AP 2730 allocates continuous SN and PN values to the DL frames buffered in the DL transmit buffer 2735 to continue the same SN series used by the first AP.

The first AP 2720 may signal the amount of data in the DL data buffer 2727 to allow the STA 2710 to determine a timing to start receiving the DL transmission 2750 from the second AP 2730. Details of the signaling are described below. If transmission order is not maintained, the STA 2710 may receive frames from the first AP 2720 and the second AP 2730 at the same time (e.g., DL forwarding value=2 of FIG. 5.)

As described at operation 2365 of FIG. 23, the STA Transition Response frame may signal SCS QoS mapping rules by indicating SCS configurations. The SCS configurations may contain map data with an IP address, a port number, and a differentiated services code point (DSCP) value for the UP, or any other information used for performing the SCS. The STA Transition Response frame may also signal MSCS configurations. Details of the MSCS configurations are described below. The STA Transition Response frame may also signal a BA bitmap size for the STA 2710.

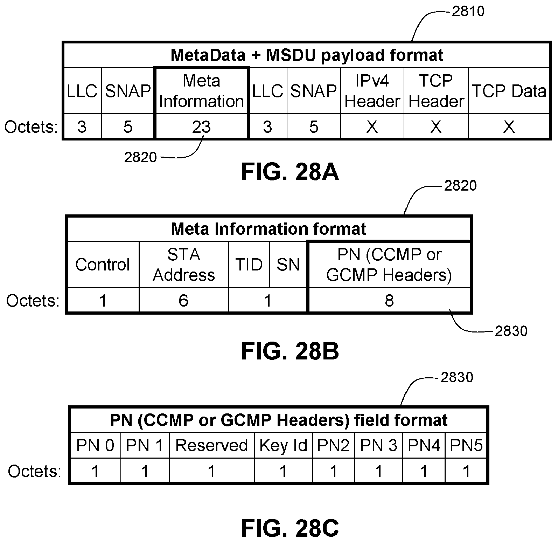

FIG. 28A illustrates an example of a MetaData and MSDU payload format 2810, according to some embodiments of the disclosure. As a convenience and not a limitation, FIG. 28A may be described with elements of FIGS. 23 and 26. The MetaData and MSDU payload format 2810 may describe a data format transmitted in operations 2375 and 2380 in FIG. 23 and operation 2680 in FIG. 26. The first AP may transmit information indicated in the MetaData and MSDU payload format 2810 to the STA at operations 2375, 2380, or 2680. An MPDU can include MAC headers (including a TID, SN, and PN) appended to the MetaData and MSDU payload format 2810 followed by a frame check sequence (FCS) field. Further, a physical layer protocol data unit (PPDU) can include the MPDU prepended with a physical layer (PHY) preamble, for example. The second AP may transmit the PPDU to the STA 2310.

The logical link control (LLC) field and subnet work access protocol (SNAP) field present on the left side of the MetaData and MSDU payload format 2810 may contain information regarding the LLC and SNAP corresponding to MetaData in meta information format 2820. The LLC field and the SNAP field following the meta information may contain information regarding the LLC and SNAP corresponding to internet protocol (IP)v4 header. The MetaData and MSDU payload format 2810 may also contain an IPv4 header, a transmission control protocol (TCP) header and TCP data. Any number of octets may be assigned as appropriate for locations where the value of octets is expressed as X in FIG. 28A. The MetaData and MSDU payload format 2810 may also contain any protocol header or data other than the IPv4 header, the TCP header, and the TCP data.

FIG. 28B illustrates an example of a meta information format 2820, according to some embodiments of the disclosure. The control field of the meta information format 2820 may indicate whether the first AP 2320 has assigned the SN or the PN for the MSDU (e.g., value is set to 0) or has not assigned any SN or PN for the MSDU (e.g., value is set to 1). The STA address of the meta information format 2820 corresponds to the address of STA 2310 of FIG. 23 may be set to an address of an MLD for Wi-Fi 7 non-AP MLD (e.g., non-AP MLD1 711 or non-AP MLD2 715 of FIG. 7) or an address of a STA for Wi-Fi 6 and STAs for earlier Wi-Fi versions. The TID of the meta information format 2820 corresponds to the TID in which the frame was transmitted in the first AP 2320. The SN of the meta information format 2820 is the SN assigned for the frame transmitted by the first AP 2320. For example, one octet may be assigned to the TID and SN of the meta information format 2820, where three bits of the octet may express the TID and five bits of the octet may express the SN. Details of the packet number (PN) (counter-mode/ cipher block chaining message authentication code (CBC-MAC) protocol (CCMP) or Galois/counter mode with cipher block chaining message authentication code protocol (GCMP) Headers) field of the meta information format 2820 are described below.

FIG. 28C illustrates examples of a PN (CCMP or GCMP Headers) field format 2830, according to some embodiments of the disclosure. The PN (CCMP or GCMP Headers) field format 2830 may contain 6 octets of the frame or a complete CCMP or GCMP headers. FIG. 28C illustrates the complete CCMP or GCMP headers. As such, the first AP 2320 can signal SN, PN and TID of the MSDU to the second AP 2330.

FIG. 29 illustrates an example 2900 of DL frames transmission in the second AP, according to some embodiments of the disclosure. For convenience and not a limitation, FIG. 29 may be described with elements of FIG. 23. In FIG. 29, a STA 2310 may transition from a first AP 2320 to the second AP 2330 by indicating that the second AP maintains continuous SNs. DL frames 2910 represent data received in the second AP 2330. The DL frames 2910 includes data that was in a DL transmit buffer of the first AP 2320 with MetaData (SNs, PNs and TIDs) and data received from the internet. The second AP may receive the DFIB (MSDUs) from the first AP 2320 and new DL frames (MSDUs) from the internet at the same time.

The second AP 2330 may map received MSDUs according to TIDs. The second AP may map MSDUs received from the first AP according to preconfigured TIDs. Details of how to map the MSDUs to the preconfigured TIDs are described below. The second AP 2330 may map MSDUs received from the internet to TIDs based on the mapping rule specific to the second AP 2330.

The second AP may buffer the MSDUs mapped to TIDs to a host buffer 2920. As shown in the host buffer 2920, the MSDUs received from the first AP 2320 and the MSDUs received from the internet may be separately buffered by TID. For example, "TID0_{FirstAP}" may represent the MSDUs received from the first AP 2320 and mapped to TID value 0. In the host buffer 2920, the MSDUs received from the first AP 2320 may be buffered in preconfigured SN and PN order. In the host buffer 2920, the MSDUs 2924 received from the internet may be buffered in an arrival order. In the host buffer 2920, the MSDUs 2922 with a TID (e.g., TID value 0) received from the first AP 2320 may be buffered to be transmitted to the STA 2310 before a transmission of the MSDUs 2924 with the same TID of value 0 received from the internet.

The second AP 2330 may assign SNs and PNs to the MSDUs 2924 received from the internet. The second AP may encrypt MSDUs 2922 received from the first AP and the MSDUs 2924 received from the internet.

The second AP 2330 may buffer the MSDUs 2922 and MSDUs 2924 to a DL transmit buffer 2930 of the second AP 2330 as MPDU(s). In the DL transmit buffer 2930, MPDUs are buffered in SN order. The second AP may buffer the MSDUs 2922 received from the first AP 2920 before buffering the MSDUs 2924 received from the internet to the DL transmit buffer 2930 so that MSDUs 2922 from the first AP are transmitted first.

The second AP 2330 may transmit the MPDUs buffered in the DL transmit buffer 2930 in PPDUs over-the-air (OTA). To transmit the MPDUs, no changes may be needed to encryption, channel access or the OTA transmissions between MSDUs 2922 received from the first AP and MSDUs 2924 received from the internet.

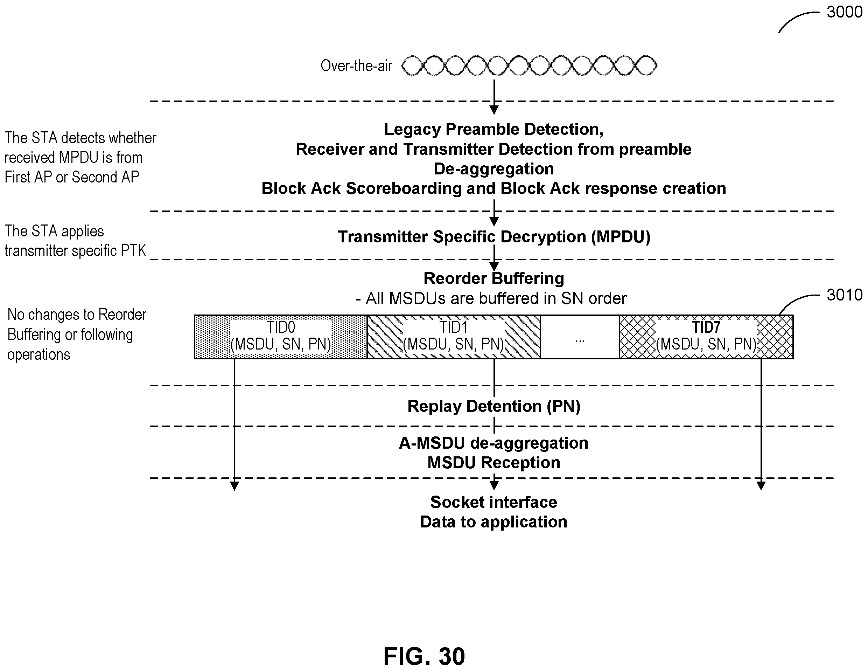

FIG. 30 illustrates an example 3000 of DL frame reception during AP-assisted AP transition, according to some embodiments of the disclosure. For convenience and not a limitation, FIG. 30 may be described with elements of FIG. 23. In FIG. 30 a STA 2310 may receive the MPDUs transmitted in PPDUs from the second AP 2330 explained in FIG. 29 via OTA. FIG. 30 may illustrate concurrent transmissions from the first AP 2320 and the second AP 2320. FIG. 30 may describe that the STA 2310 is capable to receive and organize received frames, even if they have different PTKs.

The STA 2310 may perform a legacy preamble detection, receiver and transmitter detection from a preamble, de-aggregation, a BA scoreboarding, and BA response creation to the received MPDUs. The STA 2310 may detect whether the received MPDU is from the first AP 2320 or second AP 2330 based on the transmitter of the MPDU.

The STA 2310 may apply a PTK to the received MPDUs based on the transmitter of the MPDU if the PTK is specific to the transmitter of the MPDUs. As such, the STA 2310 may decrypt and organize the received MSDUs correctly even if the MPDUs are encrypted by the different PTKs. If the first AP 2320 and the second AP 2330 use the same PTK, then there may not need to encrypt the frame again. In this approach, the first AP 2320 and the second AP 2330 may use the same PTK, MAC Addresses, TID, SN and PN to ensure the same encrypted frame content.

The STA 2310 may buffer the received MPDU as MSDUs to the reorder buffer 3010. The STA 2310 may buffer MSDUs in SN order. The STA 2310 may perform the followings on the received MSDUs: a replay detection based on the PNs of the MSDUs, aggregated-MSDU (A-MSDU) de-aggregation, MSDU reception, and socketing interface data to application. The STA 2310 can perform the same operations regardless of whether the received MSDUs are received from the first AP 2320 or the second AP 2330. As such, the STA 2310 may reorder the received MSDUs correctly.

FIG. 31 illustrates an example system 3100 for AP-assisted AP transition for an explanation of a DL SN maintenance, in accordance with some embodiments of the disclosure. FIG. 31 may illustrate where the both an first AP 3120 and a second AP 3130 transmit the DL transmission received from the first AP 3120 and the DL transmission received from the second AP 3130 concurrently (e.g., the value of the DL Forwarding subfield set to 2 as shown in FIG. 5) and how the first AP 3120 and the second AP 3230 perform maintenances of a DL transmit buffer 3125 and a DL transmit buffer 3135 to reduce duplicated frames received in a STA 3110.

FIG. 31 may be described with reference to elements from other figures in the disclosure including but not limited to FIG. 23. For example, the STA 3110 may be the STA 2310, the first AP 3120 may be the first AP 2320, and the second AP 3130 may be the second AP 2330. FIG. 31 may illustrate how to handle transmit buffers in the first AP 3120 and the second AP 3130, where the first AP 3120 and the second AP 3130 transmit DL transmissions to the STA 3110.

The STA 3110 may have a reorder buffer 3115 for reordering a DL transmission 3140 received from the first AP 3120 and a DL transmission 3150 received from the second AP 3130. The first AP 3120 may have a DL transmit buffer 3125 for buffering the DL transmission transmitted from the first AP 3120. The first AP 3120 may also have a DL data buffer 3127 for buffering the DL frames not yet in transmission. The second AP 3130 may have a DL transmit buffer 3135 for buffering the DL transmission transmitted from the second AP 3130. The reorder buffer 3115, the DL transmit buffer 3125 and the DL transmit buffer 3135 are specific to a TID of an MPDU. The reorder buffer 3115, the DL transmit buffer 3125 and the DL transmit buffer 3135 buffer MPDUs in accordance with the SNs and the PNs of the MPDUs.

In FIG. 31, it is assumed that the STA Transition Response frame 3165 may be the same as STA Transition Response frame 2765 and is transmitted from the first AP 3120 to the second AP 3130 as described in FIG. 27. Thus, the description of STA Transition Response frame 2765 is not repeated here.

As shown in FIG. 31, first AP 3120 can transmit PPDUs OTA shown as the DL transmission 3140. In response, the STA 3110 may transmit BA 3145 to the first AP 3120. A status of the BA 3145 may indicate the SN of the DL transmission 3140 received from the first AP 3120. For example, the BA 3145 to the first AP 3120 may indicate that the STA 3110 received MSDUs with SNs 103 and 104. The STA 3110 may receive PPDUs transmitted from the second AP 3130 as the DL transmission 3150, and in response, may also transmit BA 3155 to the second AP 3130 indicating the SN of the DL transmission 3150 received from the second AP 3130. The STA 3110 may further transmit the BA to a peer AP. For example, the STA 3110 may transmit BA 3145 information to the second AP 3130 indicating the SN of the DL transmission 3140 received from the first AP 3120 and may transmit BA 3155 information to the first AP 3120 indicating the SN of the DL transmission 3150 received from the second AP 3130. As such, the first AP 3120 and the second AP 3130 may determine which DL frames have been received by the STA 3110 and may avoid transmitting duplicated MSDUs to the STA 3110. The STA may transmit the BA 3145 in response to the BAR (not shown) received from the first AP 3120 or the second AP 3130. The BAs 3145 and/or 3155 may be a partial state BA.

In response to the BAs 3145 and/ 3155 or transmitting the MSDUs to the STA 3110, the first AP 3120 may transmit the SN allocation information frame 3170 to the second AP 3130, and/or the second AP 3120 may transmit the SN allocation information frame 3175 to the first AP 3120. The SN allocation information frame 3170 or 3175 may contain SNs of frames in transmission not yet acknowledged in a corresponding BA 3145 or 3155 respectively. The SN allocation information frame may contain SNs of frames received by the STA 3110. The SN allocation information frame 3170 or 3175 may also be transmitted to the STA 3110 to allow the STA 3110 to determine an amount of DFIB and SN transmission order in the DL transmit buffer 3125 or the DL transmit buffer 3125. The amount of DFIB and the distribution of the DFIB to different TIDs indicated in the SN allocation information frame 3170 or 3175 may help STA 3110 to select the time when STA 3110 starts to deliver all traffic through the second AP 3130. For instance, if the all buffered DL frames of the first AP 3120 can be buffered in reorder buffer 3115, the STA 3110 may receive the buffered DL frames from first AP 3120 before transitioning to the second AP 3130.

As such, the STA 3110 may select when the STA 3110 stops receiving the DL transmission 3140 from the first AP 3120 precisely. If the STA 3110 receives the SN allocation information frame 3170 from the first AP 3120, the STA 3110 may forward the SN allocation information frame 3170 to the second AP 3130. If for example, the SN allocation information frame 3170 indicates that a frame including a given SN transmitted by the first AP 3120 has not yet been acknowledged (e.g., a corresponding BA has not been received from the STA 3110), the second AP 3130 can transmit the frame including the given SN to the STA 3110.

By exchanging the BAs 3145 and/or 3155 or the SN allocation information frames 3170 and/or 3175, the first AP 3120 and the second AP 3130 can determine the SNs received by or transmitted to the STA 3110. The first AP 3120 or the second AP 3130 may transmit the DL transmission 3150 or the DL transmission 3140 including the MSDUs with SNs which are not received by or transmitted to the STA 3110 to avoid transmitting duplicated MSDUs to the STA 3110. For example, the second AP 3130 may select DL frames to be transmitted in the DL transmission 3150 to avoid transmitting duplicated MSDUs to the STA 3110.

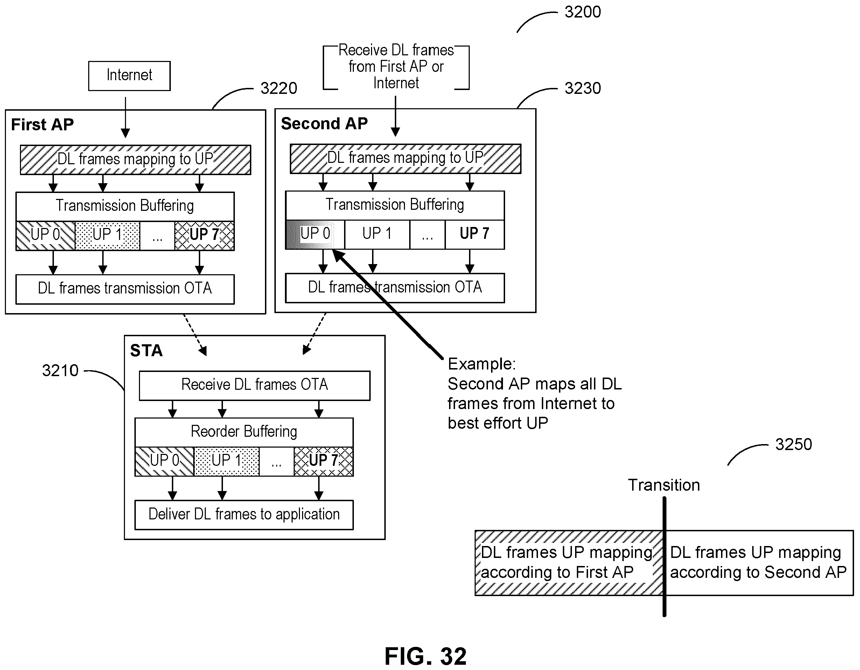

FIG. 32 illustrates an example system 3200 for AP-assisted AP transition for an explanation of a QoS mapping, in accordance with some embodiments of the disclosure. FIG. 32 illustrates the importance of the QoS mapping in AP-assisted transition. The system 3200 may explain the situation where a STA 3210 initiates a transition from a first AP 3220 to a second AP 3230.

FIG. 32 may be described with reference to elements from other figures in the disclosure including but not limited to FIG. 23. For example, the STA 3210 may be the STA 2310, the first AP 3220 may be the first AP 2320, and the second AP 3230 may be the second AP 2330.

The first AP 3220, which had been communicating with STA 3210 before the AP transition, mapped DL frames from the internet to specific UPs according to predefined QoS mapping rules. The QoS mapping rules may include the rules that the first AP 3220 maps the DL frames to UP according to a DSCP value of the DL frame, an MSCS configuration, or a SCS configuration. By applying the QoS mapping rule, the first AP 3220 can perform a transmission buffering. The first AP 3220 can buffer the DL frames to a DL transmit buffer of the first AP 3220 classified by the UP. Then, the first AP 3220 may perform a DL frames transmission OTA by transmitting the DFIB to the STA 3210 according to the UP.

The STA 3210 may perform a reorder buffering by buffering the received DFIB transmitted from the first AP 3220 to a reorder buffer classified by the UP. As such, the STA 3210 can deliver the DL frames to the application after mapping the appropriate UPs for the DL frames.

When the STA 3210 transitions from the first AP 3220 to the second AP 3230, the second AP 3230 may follow the same QoS mapping rules as the first AP 3220 followed, in order to grant the appropriate UPs to the DL frames transmitted to the STA 3210. As visually explained in a schematic diagram 3250, before the transition, the DL frames may be mapped by the first AP 3220, and after the transition, the DL frames are mapped by the second AP 3230.

The second AP 3230 may transmit at least two types of DL frames to the STA as the DL transmission. The DL transmission transmitted from the second AP 3230 may contain the DL frames that were buffered at the first AP 3220 before the transition from the first AP 3220 as DFIB. The DL transmission transmitted from the second AP 3230 may contain the DL frames received from the internet. The second AP may map appropriate UPs for both types of DL frames to allow the STA 3210 to buffer the DL frames continuously through pre- and post-transitions. The DFIB transmitted from the first AP 3220 may include the SN, PN, and UP assigned by the first AP 3220 by being indicated in the MetaData. However, at least for the DL frames received from the internet, the second AP 3230 needs to map the DL frames to the UPs. As shown in FIG. 32, the second AP 3230 may map all DL frames from the internet to the UP 0 (best effort) if the second AP 3230 cannot map the DL frames to the UPs according to the QoS mapping rule followed by the first AP 3220, and the STA 3210 may not reorder the DL frames correctly.

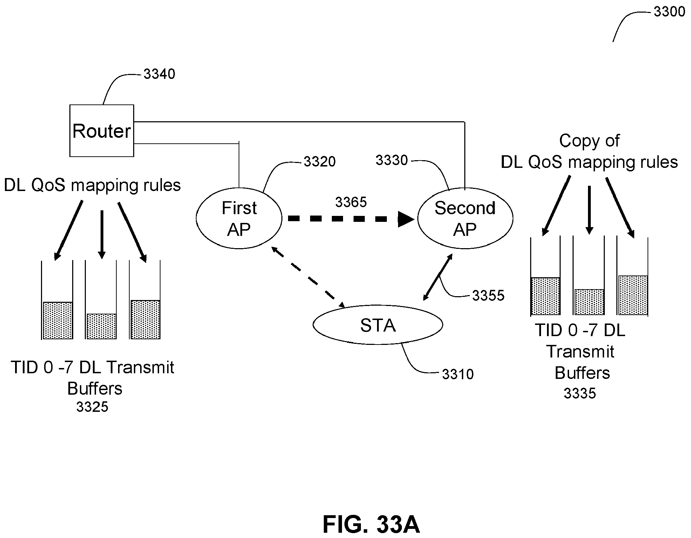

FIG. 33A illustrates an example system 3300 for AP-assisted AP transition for an explanation of a QoS mapping, in accordance with some embodiments of the disclosure. The system 3300 may be described to explain details of the situation where a STA 3310, initiating a transition from a first AP 3320 to a second AP 3330, transmits the QoS Mapping subfield of the Data Transition Control Field to a second AP 3330.

FIG. 33A may be described with reference to elements from other figures in the disclosure including but not limited to FIG. 23. For example, the STA 3310 may be the STA 2310, the first AP 3320 may be the first AP 2320, and the second AP 3330 may be the second AP 2330. The STA Transition Response frame 3365 may be the same as Transition Response frame 2765 and is transmitted from the first AP 3320 to the second AP 3330 as described in FIG. 27.

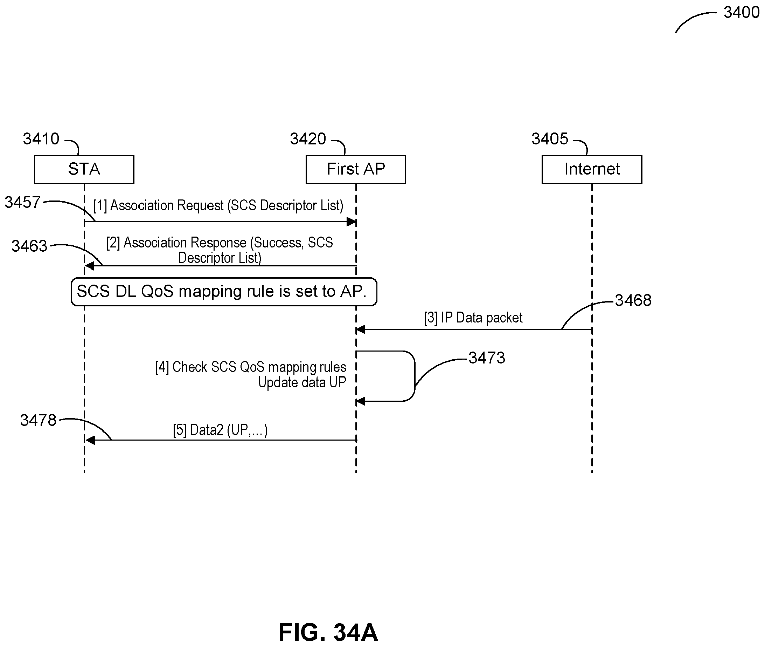

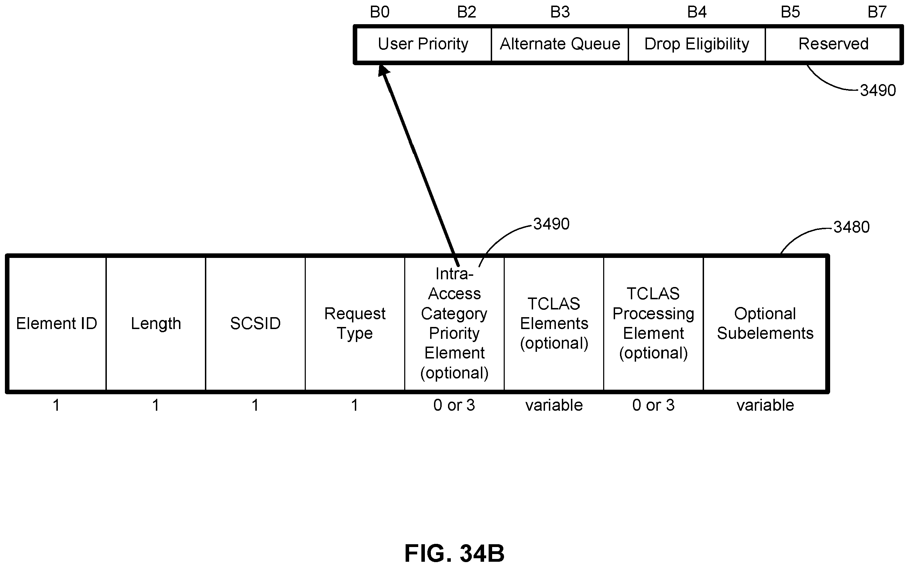

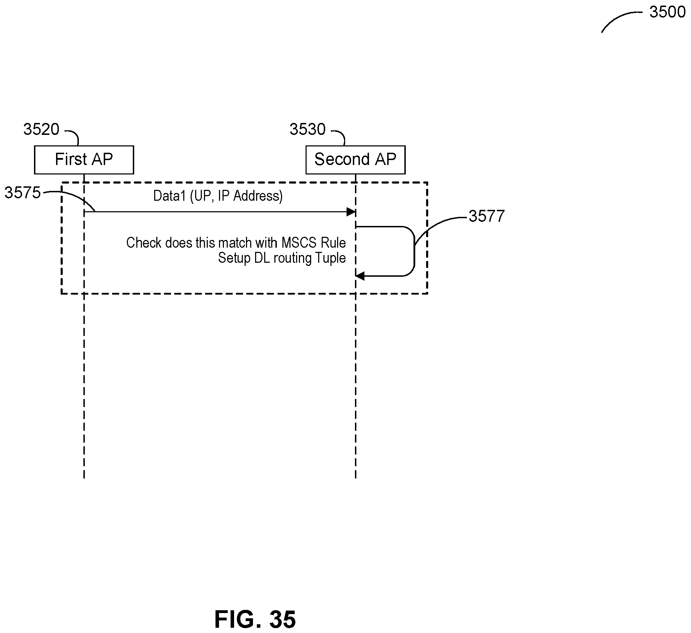

The first AP 3320 may map DL frames received by the router 3340 to TIDs (UPs) and buffer the DL frames in a DL transmit buffers 3325 classified by the TIDs. The mapping of the first AP 3320 may be performed according to a predefined QoS mapping rule. The QoS mapping rule may include: case 1) the rule that the first AP 3320 maps the DL frames based on a DSCP values of the DL frames; case 2) as shown in FIGS. 34A and 34B, based on an explicitly signaled rule (e.g., SCS QoS rule) where the STA 3310 maps the DL frames to the specific TIDs (UPs) based on IP addresses or port numbers associated with the DL frames; or case 3) as shown in FIG. 35, based on a learned rule (e.g., MSCS QoS rule) where the STA 3310 sets rules how the first AP 3320 mirrors DL frames priority mapping to UL frames and the first AP 3320 learns the mapping rules from the received UL frames.

The QoS rule and parameters to be needed to perform the mapping may be called as STA QoS settings. The router 3340, the STA 3310, the first AP 3320, and the second AP 3330 may create a network, an extended service set (ESS). The network can signal whether APs in the ESS can share the STA QoS settings. To share the STA QoS settings, the APs in the ESS may exchange the STA QoS settings via Beacon frames, Probe Response frames, or Association Response frames over a backbone. For example, the second AP 3330 can have the same STA QoS settings used by the first AP 3320. The second AP 3330 may apply the STA QoS settings to the DL frames received from the router 3340 or the first AP 3320, and buffer the DL frames into a DL transmit buffers 3335 classified by the TIDs (UPs).

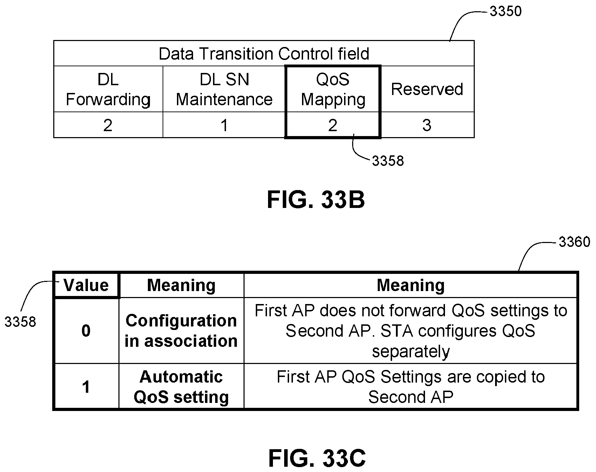

FIG. 33B illustrates an example of STA controlled signaling for AP-assisted AP transition, according to some embodiments of the disclosure. For explanation purposes and not a limitation, FIG. 33B may be described with reference to elements from FIG. 33A. For example, STA 3310 may transmit a signal 3355 to the second AP 3330 such as Data Transition Control field 3350 that includes a QoS Mapping subfield 3358. As explained with FIG. 24A, 24B, and 33B, the QoS Mapping subfield 3358 may indicate how QoS settings or rules between the STA 3310 and the first AP 3320 are shared with the second AP 3330. The Data Transition Control field 3350 may be transmitted in the Fast transition frame (3) in FIG. 3, FIG. 6, FIG. 24A, or signal 3355 of FIG. 33A.

FIG. 33C illustrates examples 3360 of STA controlled QoS Mapping for AP-assisted AP transition, according to some embodiments of the disclosure. For explanation purposes and not a limitation, FIG. 33C may be described with reference to elements from FIGs. 33A and 33B. For example, the STA 3310 may transmit the Data Transition Control field 3350 via signal 3355 to the second AP 3330 and meanings of the QoS Mapping subfield 3358 of the Transition Control field 3350 can be explained by the example 3360.

In some embodiments, the QoS Mapping subfield 3358 value (e.g., indication for a DL QoS mapping rule equals, for example, but not limited to, 0) means that the second AP 3330 may set the STA QoS settings through a configuration in an association with the STA 3310. Thus, the first AP 3320 may not forward the STA QoS settings to the second AP 3330 and the STA 3310 may configure the QoS settings separately. The STA 3310 may signal the QoS Mapping subfield with the value of 0 when the STA 3310 does not desire to continue using the QoS settings of the first AP 3320 in the second AP 3330.

In some embodiments, the QoS Mapping subfield 3358 value (e.g., indication for a DL QoS mapping rule equals, for example, but not limited to, 1) means that the second AP 3330 may set the STA QoS settings automatically. Thus, the second AP 3330 may copy the STA QoS settings followed by the first AP 3320. The STA 3310 may transmit the signal 3355 including the QoS Mapping subfield 3358 with the value of 1 when the STA 3310 desires to continue using the QoS settings of the first AP 3320 in the second AP 3330. For example, the first AP 3320 may transmit a DSCP value by transmitting the STA Transition Response frame 3365 to the second AP 3330 in the case 1. The first AP 3320 may transmit SCS configurations by transmitting the STA Transition Response frame 3365 to the second AP 3330 in the case 2. The first AP 3320 may transmit MSCS configurations by transmitting the STA Transition Response frame 3365 to the second AP 3330 in the case 3.

FIG. 34A illustrates an example of a sequence diagram 3400 for an SCS QoS Mapping settings in AP-assisted AP transition, according to some embodiments of the disclosure. The sequence diagram 3400 may explain the case 2, namely, details of the situation where a STA 3410, initiating a transition from a first AP 3420 to a second AP, transmits the SCS QoS mapping rules to the first AP 3420 in the case 2. In other words, as such, the first AP 3420 can transmit the SCS QoS mapping rules applied between the first AP 3420 and the STA 3410 to the second AP. In some examples, STA 3410 may signal the SCS QoS mapping rules or the SCS Descriptor Set element to the second AP by using the Fast transition frame (3) in operations 354, 646, 1448, 2355, 2665, of in FIG. 3, FIG. 6, FIG. 23, or FIG 26. In other words, as such, the first AP 3420 can transmit the SCS QoS mapping rules applied between the first AP 3420 and the STA 3410 to the second AP. In some examples, STA 3410 may signal the SCS QoS mapping rules or the SCS Descriptor Set element to the second AP by using the Fast transition frame (3) in operations 354, 646, 1448, 2355, 2665, of in FIG. 3, FIG. 6, FIG. 23, or FIG 26.

FIG. 34A may be described with reference to elements from other figures in the disclosure including but not limited to FIG. 23. For example, the STA 3410 may be the STA 2310, the first AP 3420 may be the first AP 2320, and the second AP 3430 may be the second AP 2330.

At operation 3457, if the STA 3410 desires to use the SCS QoS mapping to map DL frames received from the first AP 3420 to specific TIDs (UPs), the STA 3410 may add an SCS Descriptor Set element to an association request frame and transmit the association request frame to the first AP 3420. The SCS Descriptor Set element may define the SCS QoS mapping rules used in the first AP 3420. Details of the SCS Descriptor Set element are described below.

At operation 3463, the first AP 3420 may transmit an association response frame including a success status of an approval of the SCS Descriptor Set element. If the first AP 3420 approves the SCS QoS mapping rules expressed in the SCS Descriptor Set element, the SCS QoS mapping rule can be set to QoS mapping rule of the first AP 3420.

At operation 3468, internet 3405 may transmit an IP data packet to the first AP 3420. The IP data packet may be DL frames and destination of the IP data may be the STA 3410.

At operation 3473, the first AP 3420 may check the SCS QoS mapping rules indicated in the SCS Descriptor Set element and update UPs of the received data by mapping the DL frames to the TIDs (UPs).

At operation 3478, the first AP 3420 may transmit the DL frames to the STA according to the TIDs (UPs). As such, STA 3410 can set the SCS QoS mapping rules to the first AP 3420.

To maintain the SCS QoS mapping rules with the second AP, the first AP 3420 may transmit the SCS QoS mapping rules or the SCS Descriptor Set element to the second AP (not shown) by using the STA Transition Response frame in operations 2335 or 2665 of FIGS. 23 or 26.

FIG. 34B illustrates an example of an SCS Descriptor Set element, according to some embodiments of the disclosure. For explanation purposes and not a limitation, FIG. 34B may be described with reference to elements from FIG. 34A. For example, the STA 3410 may transmit a SCS Descriptor Set element 3480 to the first AP 3420 at operation 3457.

The SCS Descriptor Set element 3480 may contain an Intra-Access Category Priority Element field 3490 including a UP subfield. The SCS Descriptor Set element 3480 may also contain a traffic classification (TCLAS) Elements field indicating IP addresses and/or port number information. As such, the SCS Descriptor Set element 3480 can define the SCS QoS mapping rules. The first AP 3420 may map the DL frames to specific TIDs (UPs) based on the IP addresses and/or the port number information of the DL frames indicated in the SCS Descriptor Set element 3480.

FIG. 35 illustrates an example of a sequence diagram 3500 for AP-assisted AP transition, according to some embodiments of the disclosure. The sequence diagram 3500 may illustrate the case 3, namely, how a second AP 3530 learn MSCS mirroring rules applied between an first AP 3520 and the second AP 3530. In other words, as such, the first AP 3520 can transmit the MSCS configurations, that have been generated by the first AP 3520 by learning from the received UL frames, and that have been applied to the DL frames transmitted between the first AP 3520 and the STA, to the second AP 3530.

FIG. 35 may be described with reference to elements from other figures in the disclosure including but not limited to FIG. 23. For example, the first AP 3520 may be the first AP 2320, and the second AP 3530 may be the second AP 2330.

When the MSCS is adopted as a QoS mapping rule between the first AP 3520 and the STA, the first AP learns how to map the DL frames to specific TIDs (UPs) based on UL frames transmitted from the STA. The first AP 3520 may create a tuple to mirror TIDs (UPs) for DL frames based on the UL frames. The tuple may contain the UP and an "_address_". The first AP 3520 may derive the "_address_" specified by the address_type from the UL frame. The address_type may specify a destination of the UL frame or a source address for learning a rule. If the destination address of the UL frame to setup a tuple, then the source address with respect to the DL frame may be matched with the address of the tuple. In this way, a cross mapping of addresses may be accomplished. Thus, the first AP 3520 can set the MSCS mirroring rule by creating the tuple based on the UL frames.

As explained above, the second AP 3530 may need to apply the same QoS rule applied between the first AP 3520 and the STA. To learn the MSCS mirroring rule, the second AP may learn the MSCS mirroring rule based on the DFIB transmitted from the first AP 3520.

In the sequence diagram 3500, the STA transitions from the first AP 3520 to the second AP 3530. In the sequence diagram 3500, operations corresponding to operations 340 through 348 in FIG. 3 and operations 2345 through 2370, which are performed prior to operation 3575, are not shown for simplicity.

At operation 3575, the first AP 3520 may transmitDFIB to the second AP 3530. The DFIB may be a MSDU and MetaData (e.g., MetaData and MSDU in operations 2375 or 2380 of FIG. 23) indicating the UP of the MSDU. The DFIB may contain the IP address of the destination address of the UL frames or the source address.

At operation 3577, the second AP 3530 may check whether the UP and the to/from Port number, to/from IP address, etc. matches the MSCS mirroring rule indicated in the STA Transition Response frame or the Fast transition frame (3) (e.g., operation 2355 of FIG. 23). The second AP 3530 may derive the "_address_" specified by the address_type from the DL buffered data. The address_type may specify a destination of the DL buffered data (e.g., address of the STA) or a source address of the DL buffered data for learning a rule. If the destination address of the DL buffered data was used to setup the tuple, then the destination address with respect to the DL buffered data may be matched with the address of the tuple. Thus, the first AP 3520 can set the MSCS mirroring rule by creating the tuple based on the UL frames. In this way, a direct mapping of the fields may be accomplished. Thus, the first AP 3520 can set the MSCS mirroring rule by creating the tuple based on the DFIB transmitted from the first AP 3520. If the tuple created from the DFIB collides or contradicts with a tuple created from UL frames received by the STA, the tuple created from the UL frames may be applied as the MSCS mirroring rule.

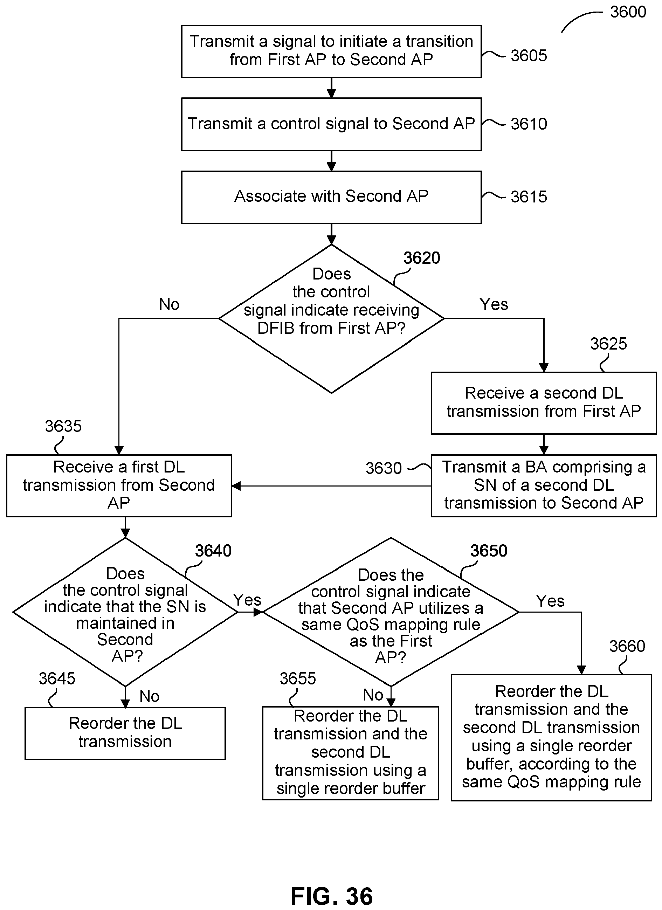

FIG. 36 illustrates an example method 3600 for a STA in AP-assisted AP transition, according to some embodiments of the disclosure. For explanation purposes and not a limitation, method 3600 may be described with reference to elements from other figures in the disclosure. For example, method 3600 may be performed by a STA including but not limited to the STA 110, the STA 910, the non-AP MLD 1910, the non-AP MI,D1 711 and the non-AP MLD2 715 of the non-AP eMI,D 710, the STA 2510, the STA 2710, the STA 3110, the STA 3210, the STA 3310, or the STA 3410. The STA may communicate with a first AP including but not limited to the first AP 120, the first AP 920, the first AP MLD 1930, the first AP MLD 720, the first AP 2520, the first AP 2720, the first AP 3120, the first AP 3220, the first AP 3320, or the first AP 3420. The STA may communicate with a second AP including but not limited to the second AP 130, the second AP 930, the second AP MLD 1940, the second AP MLD 730, the second AP 2530, the second AP 2730, the second AP 3130, the second AP 3230, or the AP 3330.

At operation 3605, the STA may transmit a signal to initiate a transition from the first AP to the second AP (e.g., the Fast Transition frame (1) 350 of FIG. 3, the Fast Transition frame (1) 642 of FIG. 6, or the Fast Transition frame (1) 2345 of FIG. 23.) Further, the STA may receive a signal to initiate the transition (e.g., the Fast Transition frame (2) 352 of FIG. 3, the Fast Transition frame (2) 644 of FIG. 6, or the Fast Transition frame (2) 2350 of FIG. 23) from the second AP.

At operation 3610, the STA may transmit a control signal to second AP. (e.g., the Fast Transition frame (3) in operation 354 of FIG. 3, the Fast Transition frame (3) in operation 646 of FIG. 6, the Fast Transition frame (3) in operation 2355 of FIG. 23, or the Fast Transition frame (3) in operation 2455 of FIG. 24A including the Data Transition Control field 400 of FIG. 4, the Data Transition Control field 2490 of FIG. 24B, or the Data Transition Control field 3350 of FIG. 33B.)

At operation 3615, the STA may associate with the second AP (e.g., the Fast Transition frame (4) in operation 360 of FIG. 3, the Fast Transition frame (4) in operation 652 of FIG. 6, or the Fast Transition frame (4) in operation 2370 of FIG. 23.)

At operation 3620, the STA may determine whether the control signal indicates receiving a second DL transmission from the first AP (e.g., whether the DL forwarding subfield 402 of the Data Transition Control field 400 of FIG. 4 includes the value of 1, 2, or 3 corresponding to FIG. 5.) In other words, the STA receives data buffered at the first AP in a DL transmission (e.g., second DL transmission.)

At operation 3625 ("Yes" at operation 3620,) the STA may receive a second DL transmission from the first AP (e.g., the STA 2510 of FIG. 25 may receive the second DL transmission from the first AP 2520, the STA 2710 of FIG. 27 may receive the second DL transmission from the first AP 2720, or the STA 3110 of FIG. 31 may receive the second DL transmission 3140 from the first AP 3120.)

At operation 3630, the STA may transmit a BA including an SN of the second DL transmission to the second AP (e.g., the STA 3110 of FIG. 31 may transmit the BA 3145 to the second AP 3130.) The BA may further contain status of all received frames. The STA may transmit the BA in response to the BAR transmitted from the second AP.

At operation 3635, the STA may receive a first DL transmission from the second AP (e.g., the DL frames in operation 366 of FIG. 3, the DL frames in operation 666 of FIG. 6, DL frames in operation 2385 of FIG. 23, DL frames in the DL transmission 3150 of FIG. 31.)

At operation 3640, the STA may determine whether the control signal indicates that the SN is maintained in the second AP (e.g., whether the DL SN Maintenance subfield 2492 of the Data Transition Control field 2490 of FIG. 24B indicates that the SN used by the first AP is continued by the second AP (e.g., the value of 1.)

At operation 3645 ("No" at operation 3640,) the STA may reorder the first DL transmission in a reorder buffer. The STA may also reorder the second DL transmission in a different reorder buffer than the reorder buffer for buffering the first DL transmission.

At operation 3650 ("Yes" at operation 3640,) the STA may determine whether the control signal indicates that the second AP utilizes a same QoS mapping rule as the first AP (e.g., Whether the QoS Mapping subfield of the Data Transition Control field 400 of FIG. 4, the Data Transition Control field 2490 of FIG. 24B, or the Data Transition Control field 3350 of FIG. 33B indicates the same QoS setting used by the first AP will be copied to the second AP (e.g., a value of 1.)

At operation 3655 ("No" at operation 3655,) the STA may reorder the first DL transmission, where the first DL transmission utilized a different QoS rule, using a different QoS rule than when receiving the second DL transmission. In some examples, the STA may use a single reorder buffer (e.g., the DL reorder buffer 2515 of FIG. 25, the DL reorder buffer 2715 of FIG. 27, or the DL reorder buffer 3010 of FIG 31.)

At operation 3660, the STA may reorder the first DL transmission and the second DL transmission using a single reorder buffer (e.g., the reorder buffer 3010 of FIG. 30) where the first DL transmission and the second DL transmission utilized the same QoS mapping rule.

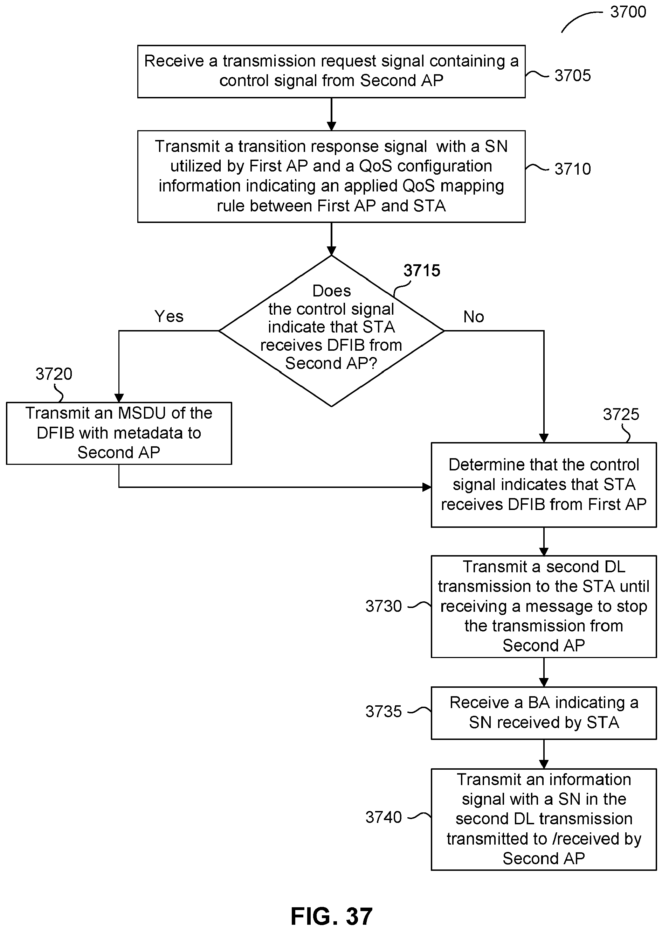

FIG. 37 illustrates an example method for a first AP in AP-assisted AP transition, according to some embodiments of the disclosure. For explanation purposes and not a limitation, method 3700 may be described with reference to elements from other figures in the disclosure. For example, method 3700 may be performed by a first AP including but not limited to the first AP 120, the first AP 920, the first AP MLD 1930, the first AP MLD 720, the first AP 2520, the first AP 2720, the first AP 3120, the first AP 3220, the first AP 3320, or the first AP 3420. The first AP may communicate with a STA including but not limited to the STA 110, the STA 910, the non-AP MLD 1910, the non-AP MLD1 711 and the non-AP MI,D2 715 of the non-AP eMLD 710, the STA 2510, the STA 2710, the STA 3110, the STA 3210, the STA 3310, or the AP 3410. The first AP may communicate with a second AP including but not limited to the second AP 130, the second AP 930, the second AP MLD 1940, the second AP MLD 730, the second AP 2530, the second AP 2730, the second AP 3130, the second AP 3230, or the AP 3330.

At operation 3705, the first AP may receive a transmission request signal containing a control signal from the second AP (e.g., the STA Transition frame in operation 356 of FIG. 3, STA Transition frame in operation 648 of FIG. 6, or the STA Transition Request frame in operation 2360 of FIG. 23.)

At operation 3710, the first AP may transmit a transition response frame with an SN utilized by the first AP and a QoS configuration information (e.g., QoS setting) indicating an applied QoS mapping rule between the first AP and the STA (e.g., STA Transition frame in operation 358 of FIG. 3, STA Transition frame in operation 650 of FIG. 6, the STA Transition Response frame in operation 2365 of FIG. 23, or the STA Transition Response frame in operation 2665 of FIG. 26.)

At operation 3715, the first AP may determine whether the control signal indicates that the STA receives DFIB buffered at the first AP, from the second AP. When the DL forwarding subfield of the Data Transition Control field 400 of FIG. 4 indicates that the first AP forwards data buffered at the first AP to the second AP (e.g., the value of 0, 1, or 2 as shown in FIG. 5), method 3700 proceeds to 3720. Otherwise, method 3700 proceeds to 3725.

At operation 3720 ("Yes" at operation 3715,) the first AP may transmit the DFIB MSDUs with MetaData to the second AP (e.g., the DFIB in operation 362 of FIG. 3, the DFIB in operations 654 and 658 of FIG. 6, the MetaData and MSDU in operations 2375 and 2380 of FIG 23, or the DFIB 2485 of FIG. 24A.)

At operation 3725, the first AP may determine that the control signal indicates that the STA receives DFIB from the first AP. In other words, the first AP may determine that the DL forwarding subfield of the Data Transition Control field 400 of FIG. 4 indicates the value of 1, 2, or 3, as shown in FIG. 5. If the DL forwarding subfield of the Data Transition Control field 400 of FIG. 4 indicates the value of 0, the first AP can resume AP operations.

At operation 3730, the first AP may transmit a second DL transmission to the STA. In some examples, the first AP continues transmitting DFIB to the STA until a message to stop is received from the second AP (e.g., the first AP 2520 of FIG. 25 may transmit the second DL transmission to the STA 2510, the first AP 2720 of FIG. 27 may transmit the second DL transmission to the STA 2710, or the first AP 3120 of FIG. 31 may transmit the second DL transmission 3140 to the STA 3110.)

At operation 3735, the first AP may receive a BA indicating an SN of a first DL transmission from the second AP that is received by the STA (e.g., the first AP 3120 of FIG. 31 may receive the BA 3155 that was sent by the STA 3110 to the second AP 3130.)

At operation 3740, the first AP may transmit/receive an SN allocation information frame to/from the second AP. An SN allocation information frame transmitted to the second AP can include an SN used in the second DL transmission from the first AP to the STA. An SN allocation information frame received by the first AP can include a different SN used in the first DL transmission from the second AP to the STA (e.g., the first AP 3120 of FIG. 31 may transmit the SN allocation information frame 3170 to the second AP 3130, or the first AP 3120 can receive the SN allocation information frame 3175 from the second AP 3130.)

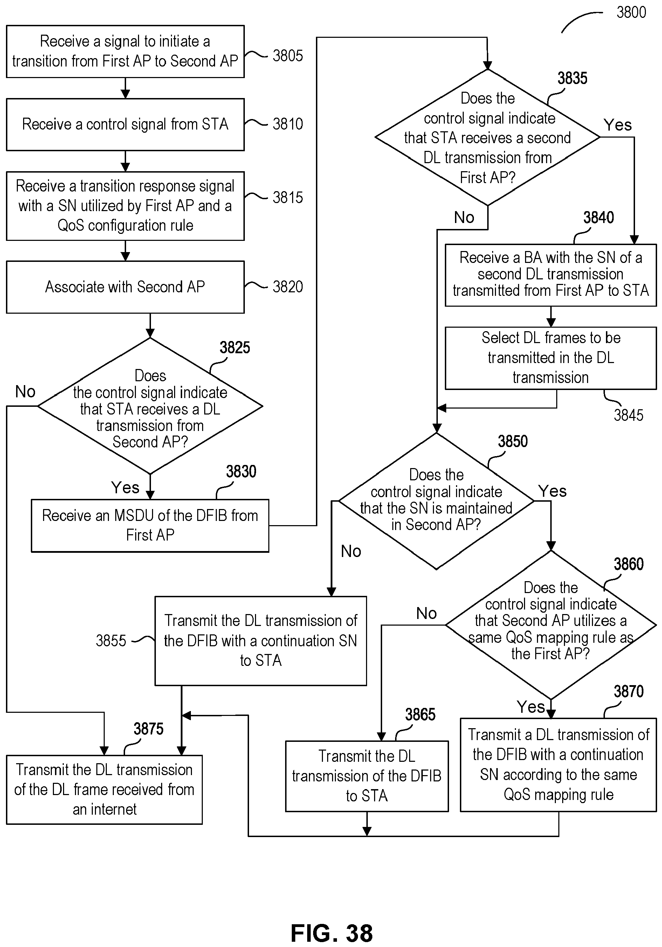

FIG. 38 illustrates an example method for a second AP in AP-assisted AP transition, according to some embodiments of the disclosure. For explanation purposes and not a limitation, method 3800 may be described with reference to elements from other figures in the disclosure. For example, method 3800 may be performed by a second AP including but not limited to the second AP 130, the second AP 930, the second AP MLD 1940, the second AP MLD 730, the second AP 2530, the second AP 2730, the second AP 3130, the second AP 3230, or the second AP 3330. The second AP may communicate with a STA including but not limited to the STA 110, the STA 910, the non-AP MLD 1910, the non-AP MLD1 711 and the non-AP MI,D2 715 of the non-AP eMLD 710, the STA 2510, the STA 2710, the STA 3110, the STA 3210, the STA 3310, or the AP 3410. The second AP may communicate with a first AP including but not limited to the first AP 120, the first AP 920, the first AP MLD 1930, the first AP MLD 720, the first AP 2520, the first AP 2720, the first AP 3120, the first AP 3220, the first AP 3320, or the first AP 3420.

At operation 3805, the second AP may receive, from the STA, a signal to initiate a transition from the first AP to the second AP (e.g., the Fast Transition frame (1) in operation 350 of FIG. 3, the Fast Transition frame (1) in operation 642 of FIG. 6, or the Fast Transition frame (1) in operation 2345 of FIG. 23.) Further, the second AP may transmit a signal to initiate the transition (e.g., the Fast Transition frame (2) in operation 352 of FIG. 3, the Fast Transition frame (2) in operation 644 of FIG. 6, or the Fast Transition frame (2) in operation 2350 of FIG. 23) to the second AP.

At operation 3810, the second AP may receive a control signal from the STA (e.g., the Fast Transition frame (3) in operation 354 of FIG. 3, the Fast Transition frame (3) in operation 646 of FIG. 6, the Fast Transition frame (3) in operation 2355 of FIG. 23, or the Fast Transition in operation frame (3) 2455 of FIG. 24A including the Data Transition Control field 400 of FIG. 4, the Data Transition Control field 2490 of FIG. 24B, or the Data Transition Control field 3350 of FIG. 33B.)

At operation 3815, the second AP may receive a transition response signal with an SN utilized by the first AP and a QoS configuration rule from the first AP (e.g., STA Transition frame in operation in operation 358 of FIG. 3, STA Transition frame in operation 650 of FIG. 6, the STA Transition Response frame in operation 2365 of FIG. 23, or the STA Transition Response frame in operation 2665 of FIG. 26.)

At operation 3820, the second AP may associate with the STA (e.g., the Fast Transition frame (4) in operation 360 of FIG. 3, the Fast Transition frame (4) in operation 652 of FIG. 6, or the Fast Transition frame (4) in operation 2370 of FIG. 23.)

At operation 3825, the second AP may determine whether the control signal indicates that the STA receives DFIB buffered at the first AP, from the second AP. When the DL forwarding subfield of the Data Transition Control field 400 of FIG. 4 indicates that the first AP forwards data buffered at the first AP to the second AP (e.g., the value of 0, 1, or 2 as shown in FIG. 5), method 3800 proceeds to 3830. Otherwise, method 3800 proceeds to 3875.

At operation 3830 ("Yes" at operation 3830,) the second AP may receive an MSDU of the DFIB from the first AP (e.g., the DFIB in operation 362 of FIG. 3, the DFIB in operations 654 and 658 of FIG. 6, the MetaData and MSDU in operations 2375 and 2380 of FIG 23, or the DFIB in operation 2485 of FIG. 24A.)

At operation 3835, the second AP may determine whether the control signal indicates that the STA receives DFIB at the first AP to the STA. For example, the DL forwarding subfield of the Data Transition Control field 400 of FIG. 4 indicates that the STA receives DFIB buffered at the first AP from the first AP (e.g., the value of 1, 2, or 3 as shown in FIG. 5.)

At operation 3840 ("Yes" at operation 3835,) the second AP may receive a BA with the SN of a second DL transmission transmitted from the first AP to the STA (e.g., the STA 3110 of FIG. 31 may transmit the BA 3145 to the second AP 3130.)

At operation 3845, the second AP may select DL frames to be transmitted in the first DL transmission (e.g., the second AP 3130 of FIG. 31 may select DL frames to be transmitted in the first DL transmission to avoid transmitting duplicated MSDUs to the STA 3110.)

At operation 3850, the second AP may determine whether the control signal indicates that the SN is maintained in the second AP (e.g., whether the DL SN Maintenance subfield 2492 of the Data Transition Control field 2490 of FIG. 24B indicates that the SN used by the first AP is continued by the second AP (e.g., the value of 1.)

At operation 3855 ("No" at operation 3850,) the second AP may transmit the first DL transmission of the DFIB to the STA (e.g., the second AP 2530 of FIG. 25 may transmit the DFIB to the STA.) Method 3800 can proceed to 3875.

At operation 3860 ("Yes" at operation 3850,) the second AP may determine whether the control signal indicates that the second AP utilizes a same QoS mapping rule as the first AP (e.g., Whether the QoS Mapping subfield of the Data Transition Control field 400 of FIG. 4, the Data Transition Control field 2490 of FIG. 24B, or the Data Transition Control field 3350 of FIG. 33B indicates the same QoS setting used by the first AP will be copied to the second AP (e.g., a value of 1.)

At operation 3865 ("No" at operation 3860,) the second AP may transmit the first DL transmission of the DFIB with a continuation SN to the STA (e.g., the second AP 2730 of FIG. 27 may transmit the DFIB with a continuation SN to the STA, or the second AP 3130 of FIG. 31 may transmit the DFIB with a continuation SN to the STA.) Method 3800 can proceed to 3875.

At operation 3870 ("Yes" at operation 3860,) the second AP may transmit the first DL transmission of the DFIB with a continuation SN to the STA according to the same QoS mapping rule (e.g., the second AP 2730 of FIG. 27 may transmit the DFIB with a continuation SN according to the same QoS mapping rule to the STA, or the second AP 3130 of FIG. 31 may transmit the DFIB with a continuation SN according to the same QoS mapping rule to the STA.) Method 3800 can proceed to 3875.

At operation 3875, the second AP may transmit the first DL transmission of the DL frame received from an internet (e.g., the second AP 2330 may transmit the MSDUs 2924 of FIG. 29 received from the internet.)

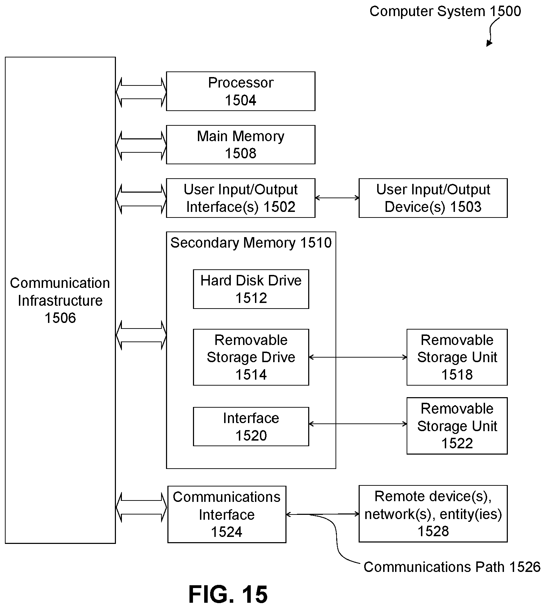

Various embodiments can be implemented, for example, using one or more well-known computer systems, such as computer system 1500 shown in FIG. 15. Computer system 1500 can be any well-known computer capable of performing the functions described herein. For example, and without limitation: the STA 110, the first AP 120, the second AP 130, the router 140, of FIG. 1, system 200 of FIG. 2, electronic devices of FIGS. 3, 6-10, 13, 14, 19-35, methods 1600, 1700, 1800, 3600, 3700, and 3800 of FIGS. 16-18 and 36-38 (and/or other apparatuses and/or components shown in the figures) may be implemented using computer system 1500, or portions thereof.

Computer system 1500 includes one or more processors (also called central processing units, or CPUs), such as a processor 1504. Processor 1504 is connected to a communication infrastructure 1506 that can be a bus. One or more processors 1504 may each be a graphics processing unit (GPU). In an embodiment, a GPU is a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 1500 also includes user input/output device(s) 1503, such as monitors, keyboards, pointing devices, etc., that communicate with communication infrastructure 1506 through user input/output interface(s) 1502. Computer system 1500 also includes a main or primary memory 1508, such as random access memory (RAM). Main memory 1508 may include one or more levels of cache. Main memory 1508 has stored therein control logic (e.g., computer software) and/or data.

Computer system 1500 may also include one or more secondary storage devices or memory 1510. Secondary memory 1510 may include, for example, a hard disk drive 1512 and/or a removable storage device or drive 1514. Removable storage drive 1514 may be a floppy disk drive, a magnetic tape drive, a compact disk drive, an optical storage device, tape backup device, and/or any other storage device/drive.

Removable storage drive 1514 may interact with a removable storage unit 1518. Removable storage unit 1518 includes a computer usable or readable storage device having stored thereon computer software (control logic) and/or data. Removable storage unit 1518 may be a floppy disk, magnetic tape, compact disk, DVD, optical storage disk, and/ any other computer data storage device. Removable storage drive 1514 reads from and/or writes to removable storage unit 1518 in a well-known manner.

According to some embodiments, secondary memory 1510 may include other means, instrumentalities or other approaches for allowing computer programs and/or other instructions and/or data to be accessed by computer system 1500. Such means, instrumentalities or other approaches may include, for example, a removable storage unit 1522 and an interface 1520. Examples of the removable storage unit 1522 and the interface 1520 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 1500 may further include a communication or network interface 1524. Communication interface 1524 enables computer system 1500 to communicate and interact with any combination of remote devices, remote networks, remote entities, etc. (individually and collectively referenced by reference number 1528). For example, communication interface 1524 may allow computer system 1500 to communicate with remote devices 1528 over communications path 1526, which may be wired and/or wireless, and which may include any combination of LANs, WANs, the Internet, etc. Control logic and/or data may be transmitted to and from computer system 1500 via communication path 1526.

The operations in the preceding embodiments can be implemented in a wide variety of configurations and architectures. Therefore, some or all of the operations in the preceding embodiments may be performed in hardware, in software or both. In some embodiments, a tangible, non-transitory apparatus or article of manufacture includes a tangible, non-transitory computer useable or readable medium having control logic (software) stored thereon is also referred to herein as a computer program product or program storage device. This includes, but is not limited to, computer system 1500, main memory 1508, secondary memory 1510 and removable storage units 1518 and 1522, as well as tangible articles of manufacture embodying any combination of the foregoing. Such control logic, when executed by one or more data processing devices (such as computer system 1500), causes such data processing devices to operate as described herein.

Based on the teachings contained in this disclosure, it will be apparent to persons skilled in the relevant art(s) how to make and use embodiments of the disclosure using data processing devices, computer systems and/or computer architectures other than that shown in FIG. 15. In particular, embodiments may operate with software, hardware, and/or operating system implementations other than those described herein.

It is to be appreciated that the Detailed Description section, and not the Summary and Abstract sections, is intended to be used to interpret the claims. The Summary and Abstract sections may set forth one or more but not all exemplary embodiments of the disclosure as contemplated by the inventor(s), and thus, are not intended to limit the disclosure or the appended claims in any way.

While the disclosure has been described herein with reference to exemplary embodiments for exemplary fields and applications, it should be understood that the disclosure is not limited thereto. Other embodiments and modifications thereto are possible, and are within the scope and spirit of the disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. In addition, alternative embodiments may perform functional blocks, steps, operations, methods, etc. using orderings different from those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein.

The breadth and scope of the disclosure should not be limited by any of the above-described exemplary embodiments, but should be defined only in accordance with the following claims and their equivalents. The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should only occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of, or access to, certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

### Additional Statements

According to an aspect of the invention, there is provided a station (STA) comprising:
a transceiver; and
a processor communicatively coupled to the transceiver, configured to:
   transmit via the transceiver, when the STA is associated with a first access point (AP) and is transitioning to a second AP, to the second AP a control signal comprising a first indication for sequence number (SN) maintenance; and
   receive via the transceiver, from the second AP responsive to the first indication for SN maintenance, a first downlink (DL) transmission comprising a next SN, wherein the next SN is a continuation of an SN series utilized by the first AP for one or more previous DL transmissions.

Preferably, further comprising a single reorder buffer communicatively coupled to the processor, wherein the single reorder buffer corresponds to a traffic identifier (TID) and the processor is further configured to:
receive via the transceiver, from the first AP, a second DL transmission comprising DL frames initially buffered at the first AP (DFIB); and
reorder, in the single reorder buffer, one or more packets received from the first DL transmission and the second DL transmission.

Preferably, wherein the control signal further comprises a second indication corresponding to a DL quality of service (QoS) mapping rule for the second AP, wherein the processor is further configured to: determine the TID of the one or more packets based at least on the DL QoS mapping rule.

Preferably, wherein the processor is further configured to:
receive via the transceiver, from the first AP, a SN allocation information frame comprising a second SN corresponding to the second DL transmission, wherein frames corresponding to the second SN are not yet acknowledged;
transmit, via the transceiver, to the second AP, the SN allocation information frame; and
receive via the transceiver, from the second AP, a third DL transmission comprising the second SN.

Preferably, wherein the processor is further configured to:
determine based at least on the SN allocation information frame, an amount of DL traffic buffered at the first AP; and
stop receiving the frames from the first AP based at least on the SN allocation frame.

Preferably, wherein the first DL transmission comprises a first Media Access Control (MAC) service data unit (MSDU) and a second MSDU, wherein the first MSDU comprises DFIB that are forwarded to the second AP, and the second MSDU comprises DL frames initially buffered at the second AP, wherein the first MSDU and the second MSDU correspond to a same TID, and wherein the first MSDU is received before the second MSDU.

According to an aspect of the invention, there is provided a first access point (AP) comprising:
a transceiver; and
a processor communicatively coupled to the transceiver, configured to:
   receive, when a station (STA) is associated with the first AP and is transitioning to a second AP, from the second AP a control signal comprising a first indication for sequence number (SN) maintenance; and
   transmit to the second AP, responsive to the first indication for SN maintenance, a transition response signal comprising an SN of an SN series utilized by the first AP for one or more previous downlink (DL) transmissions.

Preferably, wherein the processor is further configured to:
transmit via the transceiver, to the second AP a Media Access Control (MAC) service data unit (MSDU) with MetaData, wherein the MetaData comprises a packet number (PN) assigned to the MSDU, and wherein the MSDU comprises DL frames initially buffered at the first AP (DFIB).

Preferably, wherein the processor is further configured to:
transmit via the transceiver, to the STA a first DL transmission with a second SN, wherein the first DL transmission comprises DFIB; and
transmit to the second AP an SN allocation information frame indicating that the second SN transmitted in the first DL transmission.

Preferably, wherein the processor is further configured to:
receive from the STA a block acknowledgement (BA) comprising the SN received by the STA, wherein the SN allocation information frame further comprises a status of the BA.

Preferably, wherein the processor is further configured to:
receive, from the STA, a block acknowledgement (BA) comprising a second SN of a second DL transmission, transmitted from the second AP to the STA; and
transmit, to the second AP, an SN allocation information frame indicating the second SN.

Preferably, wherein the processor is further configured to:
receive, from the second AP, an SN allocation information frame indicating a second SN of a second DL transmission, transmitted from the first AP to the STA; and
transmit DL frames determined based on the second SN indicated in the SN allocation information.

Preferably, wherein the control signal further comprises a second indication for the second AP to utilize a same quality of service (QoS) mapping rule applied between the first AP and the STA, the transition response signal further comprises the QoS mapping rule.

According to an aspect of the invention, there is provided a second access point (AP) comprising:
a transceiver; and
a processor communicatively coupled to the transceiver, configured to:
   receive from a station (STA) transitioning to the second AP, a control signal comprising a first indication for sequence number (SN) maintenance;
   receive from a first AP with which the STA is currently associated, a transition response signal comprising an SN of an SN sequence utilized by the first AP, corresponding to the first indication; and
   transmit to the STA a first downlink (DL) transmission comprising a next SN, wherein the next SN is a continuation of the SN series utilized by the first AP for one or more previous DL transmissions.

Preferably, wherein the processor is further configured to:
receive from the first AP a first Media Access Control (MAC) service data unit (MSDU) with MetaData, wherein the MSDU comprises DL frames initially buffered at the first AP (DFIB), wherein the MetaData comprises a second SN of the SN series; and
transmit to the STA, the first MSDU with the second SN.

Preferably, wherein the processor is further configured to transmit a second DL transmission, wherein the second DL transmission comprises a first Media Access Control (MAC) service data unit (MSDU) and a second MSDU, wherein the first MSDU comprises DFIB, and the second MSDU comprises DL frames initially buffered at the second AP, wherein the first MSDU and the second MSDU correspond to a same TID, and wherein the first MSDU is received before the second MSDU.

Preferably, wherein the processor is further configured to:
receive, from the STA, a block acknowledgement (BA) comprising a second SN of a second DL transmission, transmitted from the first AP to the STA, comprises DFIB; and
transmit, to the first AP, an SN allocation information frame indicating the second SN.

Preferably, wherein the processor is further configured to:
receive, from the first AP, an SN allocation information frame indicating a second SN of a first DL transmission, transmitted from the second AP to the STA; and
transmit DL frames determined based on the second SN indicated in the SN allocation information.

Preferably, wherein the processor is further configured to:
receive, from the first AP, an SN allocation information frame indicating a second SN of a first DL transmission, transmitted from the second AP to the STA; and
transmit DL frames determined based on the second SN indicated in the SN allocation information.

Preferably, wherein the control signal further comprises a second indication for the second AP to utilize a same quality of service (QoS) mapping rule applied between the first AP and the STA, and wherein the processor is further configured to:
receive, from the first AP, the same QoS mapping rule; and
transmit a second DL transmission according to the same QoS mapping rule.

## Claims

1. A station (STA) comprising:
a transceiver; and
a processor communicatively coupled to the transceiver, configured to:
transmit via the transceiver, when the STA is associated with a first access point (AP) and is transitioning to a second AP, to the second AP a control signal comprising a first indication for sequence number (SN) maintenance; and
receive via the transceiver, from the second AP responsive to the first indication for SN maintenance, a first downlink (DL) transmission comprising a next SN, wherein the next SN is a continuation of an SN series utilized by the first AP for one or more previous DL transmissions.

2. The STA of claim 1, further comprising a single reorder buffer communicatively coupled to the processor, wherein the single reorder buffer corresponds to a traffic identifier (TID) and the processor is further configured to:
receive via the transceiver, from the first AP, a second DL transmission comprising DL frames initially buffered at the first AP (DFIB); and
reorder, in the single reorder buffer, one or more packets received from the first DL transmission and the second DL transmission;
optionally, wherein the control signal further comprises a second indication corresponding to a DL quality of service (QoS) mapping rule for the second AP, wherein the processor is further configured to determine the TID of the one or more packets based at least on the DL QoS mapping rule.

3. The STA of claim 2, wherein the processor is further configured to:
receive via the transceiver, from the first AP, a SN allocation information frame comprising a second SN corresponding to the second DL transmission, wherein frames corresponding to the second SN are not yet acknowledged;
transmit, via the transceiver, to the second AP, the SN allocation information frame; and
receive via the transceiver, from the second AP, a third DL transmission comprising the second SN;
optionally, wherein the processor is further configured to:
determine based at least on the SN allocation information frame, an amount of DL traffic buffered at the first AP; and
stop receiving the frames from the first AP based at least on the SN allocation frame.

4. A first access point (AP) comprising:
a transceiver; and
a processor communicatively coupled to the transceiver, configured to:
receive, when a station (STA) is associated with the first AP and is transitioning to a second AP, from the second AP a control signal comprising a first indication for sequence number (SN) maintenance; and
transmit to the second AP, responsive to the first indication for SN maintenance, a transition response signal comprising an SN of an SN series utilized by the first AP for one or more previous downlink (DL) transmissions.

5. The first AP of claim 4, wherein the processor is further configured to:
transmit via the transceiver, to the second AP a Media Access Control (MAC) service data unit (MSDU) with MetaData, wherein the MetaData comprises a packet number (PN) assigned to the MSDU, and wherein the MSDU comprises DL frames initially buffered at the first AP (DFIB).

6. The first AP of either of claims 4 or 5, wherein the processor is further configured to:
transmit via the transceiver, to the STA a first DL transmission with a second SN, wherein the first DL transmission comprises DFIB; and
transmit to the second AP an SN allocation information frame indicating that the second SN transmitted in the first DL transmission;
optionally, wherein the processor is further configured to receive from the STA a block acknowledgement (BA) comprising the SN received by the STA, wherein the SN allocation information frame further comprises a status of the BA.

7. The first AP of any of claims 4 to 6, wherein the processor is further configured to:
receive, from the STA, a block acknowledgement (BA) comprising a second SN of a second DL transmission, transmitted from the second AP to the STA; and
transmit, to the second AP, an SN allocation information frame indicating the second SN.

8. The first AP of any of claims 4 to 7, wherein the processor is further configured to:
receive, from the second AP, an SN allocation information frame indicating a second SN of a second DL transmission, transmitted from the first AP to the STA; and
transmit DL frames determined based on the second SN indicated in the SN allocation information.

9. The first AP of any of claims 4 to 8, wherein the control signal further comprises a second indication for the second AP to utilize a same quality of service (QoS) mapping rule applied between the first AP and the STA, the transition response signal further comprises the QoS mapping rule.

10. A second access point (AP) comprising:
a transceiver; and
a processor communicatively coupled to the transceiver, configured to:
receive from a station (STA) transitioning to the second AP, a control signal comprising a first indication for sequence number (SN) maintenance;
receive from a first AP with which the STA is currently associated, a transition response signal comprising an SN of an SN sequence utilized by the first AP, corresponding to the first indication; and
transmit to the STA a first downlink (DL) transmission comprising a next SN, wherein the next SN is a continuation of the SN series utilized by the first AP for one or more previous DL transmissions.

11. The second AP of claim 10, wherein the processor is further configured to:
receive from the first AP a first Media Access Control (MAC) service data unit (MSDU) with MetaData, wherein the MSDU comprises DL frames initially buffered at the first AP (DFIB), wherein the MetaData comprises a second SN of the SN series; and
transmit to the STA, the first MSDU with the second SN.

12. The second AP of any of claims 10 to 11, wherein the processor is further configured to transmit a second DL transmission, wherein the second DL transmission comprises a first Media Access Control (MAC) service data unit (MSDU) and a second MSDU, wherein the first MSDU comprises DFIB, and the second MSDU comprises DL frames initially buffered at the second AP, wherein the first MSDU and the second MSDU correspond to a same TID, and wherein the first MSDU is received before the second MSDU.

13. The second AP of any of claims 10 to 12 wherein the processor is further configured to:
receive, from the STA, a block acknowledgement (BA) comprising a second SN of a second DL transmission, transmitted from the first AP to the STA, comprises DFIB; and
transmit, to the first AP, an SN allocation information frame indicating the second SN.

14. The second AP of any of claims 10 to 13 wherein the processor is further configured to:
receive, from the first AP, an SN allocation information frame indicating a second SN of a first DL transmission, transmitted from the second AP to the STA; and
transmit DL frames determined based on the second SN indicated in the SN allocation information.

15. The second AP of any of claims 10 to 14, wherein the control signal further comprises a second indication for the second AP to utilize a same quality of service (QoS) mapping rule applied between the first AP and the STA, and wherein the processor is further configured to:
receive, from the first AP, the same QoS mapping rule; and
transmit a second DL transmission according to the same QoS mapping rule.
